# FASCICULE DE BREVET EUROPEEN

(11) **EP 3 600 618 B1**
(45) Date de publication et mention de la délivrance du brevet: **17.03.2021**
(21) Numéro de dépôt: 18722661.8
(22) Date de dépôt: 30.03.2018
(51) Int. Cl.: B01D 53/90, B01D 53/94, F01N 3/20

(54) **COMPOSITION POUR LE TRAITEMENT DES GAZ D'ECHAPPEMENT**
ZUSAMMENSETZUNG ZUR BEHANDLUNG VON ABGASEN
COMPOSITION FOR TREATING EXHAUST GASES

(30) Priorité: 31.03.2017 FR 1752783
(43) Date de publication de la demande: 05.02.2020
(73) Titulaire: Total Marketing Services, 92800 Puteaux (FR)
(72) Inventeur: COLLIN, Annabelle, 69007 Lyon (FR); OBIOLS, Jérôme, 69320 Feyzin (FR)
(74) Mandataire: Corizzi, Valérie
(86) Numéro de dépôt international: PCT/FR2018/050793
(87) Numéro de publication internationale: WO 2018/178592

(56) Documents cités:
- EP-A1- 3 124 016
- WO-A1-01/36570
- WO-A2-2008/125745
- DE-A1-102008 041 903
- US-A- 5 453 257
- US-A- 5 498 406
- US-A1- 2014 045 942

## Description

La présente invention concerne une composition pour le traitement des gaz d'échappement à la sortie des moteurs Diesel embarqués ou stationnaires. Elle concerne également son utilisation dans tout dispositif de traitement de ces gaz d'échappement, que les moteurs soient des moteurs poids lourds ou des moteurs pour véhicules légers ou encore des moteurs pour des applications industrielles stationnaires.

### Etat de la technique antérieure

Les normes européennes en matière de pollution pour les carburants Diesel, en particulier celles applicables aux véhicules poids lourds, ont conduit les constructeurs de moteurs à mettre en place les post-traitements des gaz d'échappement. Ces post-traitements incluent les technologies SCR (Selective Catalytic Reducer ou réducteur catalytique sélectif en français), EGR (Exhaust Gas Recirculation ou recirculation de gaz d'échappement en français) et FAP (filtres à particules). Ces divers post-traitements peuvent être installés seuls ou en combinaison dans la mesure où ils n'agissent pas toujours sur les mêmes polluants présents dans les gaz d'échappement.

Pour répondre à la norme, en particulier à la norme Euro 6, qui s'applique en Europe à tous les véhicules à partir du 1^{er} septembre 2015, la plupart des constructeurs européens de véhicules automobiles ont opté pour le post-traitement SCR à l'échappement de leurs moteurs, ce post-traitement agissant exclusivement sur la diminution des oxydes d'azote présents dans les gaz. Un autre avantage de cette technique est qu'elle permet, par des réglages optimisés du moteur, une réduction sensible de la consommation du carburant, en particulier par rapport à d'autres systèmes de post-traitement comme les pièges à NOx.

Le post-traitement SCR consiste à réduire les NOx ou oxydes d'azote (NO, NO₂) sur un catalyseur contenant du platine et du palladium ou cuivre/zéolithe, et en présence d'un agent de réduction, généralement l'ammoniaque gazeux. Pour introduire de l'ammoniaque gazeux dans l'échappement, il est connu de le produire directement dans la conduite avant le système SCR en vaporisant une solution aqueuse d'urée. L'urée se trouvant injectée à une température moyenne oscillant généralement de 150 à 400°C, s'hydrolyse progressivement en ammoniaque gazeux. Eventuellement, d'autres agents précurseurs de l'ammoniaque peuvent être employés dans des conditions similaires. Un injecteur est usuellement employé pour introduire la solution aqueuse d'urée dans la conduite échappement en amont du catalyseur SCR. Un mixer ou mélangeur, installé entre l'injecteur et le catalyseur SCR, peut être utilisé pour améliorer la vaporisation de spray de solution aqueuse d'urée dans le flux de gaz d'échappement. Un exemple de mixer est décrit dans le document SAE 2015-01-1020 (« Advanced Close Coupled SCR Compact Mixer Architecture », Michelin J. et al.).

Deux configurations de la ligne de post-traitement SCR peuvent être mises en œ uvre. La première, dite configuration « underfloor » ou « sous-plancher », consiste à placer le post-traitement SCR en aval du moteur, sous le plancher du véhicule (généralement à plus de 50 cm à 1 m de la sortie de la chambre de combustion). Elle présente l'avantage de pouvoir installer le post-traitement dans une zone ou beaucoup d'espace est disponible et ainsi se placer dans des conditions de géométrie échappement les plus favorables à une vaporisation de la solution aqueuse d'urée. Une autre configuration dite « close-coupled », consiste à placer le post-traitement SCR à proximité immédiate du moteur, (généralement à moins de 50 cm à 1 m de la sortie de la chambre de combustion). Par rapport à la configuration dite « underfloor », cette configuration présente l'avantage de bénéficier de températures plus élevées dans le catalyseur SCR, améliorant son efficacité. En revanche, son inconvénient est que l'espace disponible est plus réduit qu'en configuration « underfloor », obligeant l'injecteur de solution aqueuse d'urée à être placé plus proche du mixer et du catalyseur SCR. Cette configuration peut conduire à une moins bonne vaporisation de la solution aqueuse d'urée. Les documents SAE 2014-01-1522 (« Control of a Combined SCR on Filter and Under-Floor SCR System for Low Emission Passenger Cars", Balland J. et al.) et SAE 2015-01-0994 ("Next Generation All in One Close-Coupled Urea-SCR System", Kojima H. et al.), ou encore WO2014060987A1 décrivent ces deux types de configurations.

Dans certaines configurations d'installation du SCR et de l'injection de précurseur d'ammoniaque, en particulier de l'injection d'urée, les constructeurs ont constaté l'apparition de dépôts dans les conduites d'échappement situées entre l'injecteur et le catalyseur SCR. Ces dépôts peuvent être suffisamment importants pour provoquer une obturation partielle voire totale du conduit d'échappement liée à la contre pression à l'échappement et créer ainsi des pertes en puissance du moteur. A configuration d'injection constante, la quantité de dépôts formés est plus grande à basses températures qu'à hautes températures. Ces dépôts, selon les analyses qui ont été faites dans la publication technique SAE 2016-01-2327, sont de nature variable selon la température à laquelle ils ont été formés. Ainsi, aux températures inférieures à 250-300°C, ils sont constitués majoritairement d'urée cristallisée, et sont constitués majoritairement d'acide cyanurique au-delà de 300°C. Cet acide cyanurique peut se sublimer et produire à nouveau de l'ammoniaque gazeux. Toutefois, cette réaction ne peut se produire qu'à très haute température, supérieure à 450°C, température rarement atteinte à cet endroit dans les conduites d'échappement.

On a constaté notamment que ces dépôts étaient présents dans les conduites présentant des coudes du fait du manque de place dans le véhicule, et lorsque la distance séparant l'injection d'urée et le premier coude est trop courte, comme dans les configurations « close-coupled » décrites précédemment. L'hypothèse formulée est que dans ce type de configuration, une partie des gouttes d'urée n'a pas le temps de se vaporiser et de se décomposer totalement en ammoniaque gazeux. Les gouttes d'urée se déposent sur la paroi du conduit qui est à une température trop basse pour permettre la décomposition complète en ammoniaque gazeux, et elles ne se décomposent que partiellement en formant des dépôts d'acide cyanurique collés à la paroi. Par ailleurs, on a également constaté qu'en fonction de la configuration de la ligne SCR et de la température, l'urée était susceptible de cristalliser dans la ligne, avec pour conséquence une obstruction de la ligne (voir document SAE 2017-26-0132 (« A Study on the Factors Affecting the Formation of Urea Crystals and Its Mitigation for SCR After-Treatment Systems », Jain A. et al.).

WO2008/125745 décrit une solution aqueuse comprenant une partie majeure d'un constituant susceptible de libérer de l'ammoniaque gazeux au-dessus de 200°C et une partie mineure d'au moins un additif polyfonctionnel dont la HLB varie de 7 à 17 pour limiter la formation des dépôts à base d'acide cyanurique dans tout dispositif de pulvérisation visant le post-traitement des gaz d'échappement, plus particulièrement des dispositifs SCR. Les additifs polyfonctionnels mis en œuvre sont notamment des éthers d'alcools gras polyalcoxylés et des esters d'alcools gras polyalcoxylés.

EP2337625 décrit un mélange de tensioactifs permettant de réduire le diamètre des gouttelettes d'une solution aqueuse d'urée, et ainsi favoriser sa vaporisation et la transformation de l'urée en ammoniaque gazeux dans un système SCR. La solution proposée consiste en un mélange d'alcools gras polyalcoxylés, avec des degrés d'alcoxylation contrôlés.

EP2488283 décrit des additifs pour solution d'urée du type alcools gras polyalcoxylés particuliers. Ces additifs sont également destinés à favoriser une réduction de la formation des dépôts issus de la décomposition de l'urée dans les systèmes SCR.

WO 01/36570 divulgue des compositions de carburant comprenant jusqu'à 40% en masse d'eau, de 0,1 à 2,5% en masse d'un composé réducteur des NOx dérivé de l'acide carbamique et éventuellement jusqu'à 15% en masse d'un ou plusieurs additifs usuels des carburants. La combustion de ces compositions de carburant permet de réduire la teneur en NOx dans les gaz d'échappement.

US 5,453,257 enseigne la réduction de la teneur en oxydes d'azote dans les effluents de combustion d'un carburant carboné par l'introduction dans lesdits effluents d'une émulsion d'un composé réducteur des oxydes d'azote et d'un composé hydrocarboné présentant une température d'ébullition inférieure à celle de l'agent réducteur des oxydes d'azote.

EP 3 124 016, US 2014/0045942 et US 5,498,406 divulguent des compositions pour application topique comprenant de l'urée et différents tensioactifs.

Toutefois, il a été constaté que certaines solutions de précurseur d'ammoniaque, en particulier d'urée, additivées, lorsqu'elles sont introduites dans le réservoir, ont tendance à mousser. Ce moussage gêne le remplissage du réservoir et peut entraîner son débordement. En outre, ce moussage peut entrainer l'injection d'air dans le système. Ce phénomène perturbe le contrôle de la quantité de solution injectée.

Une des solutions à ce problème consiste à ajouter des agents anti-mousse. Mais de tels additifs représentent un surcoût non négligeable.

Il subsiste donc le besoin d'un additif pour solutions aqueuses à base d'un agent réducteur des NOx, par exemple d'ammoniaque ou d'un précurseur dudit agent réducteur, comme l'urée, permettant de former une composition aux propriétés optimisées pour une utilisation sur une ligne SCR. On attend de cette composition qu'elle soit capable d'éviter ou de réduire les dépôts lors de l'utilisation sur une ligne SCR. On attend aussi de cette composition qu'elle présente un moussage réduit comparativement aux compositions additivées à base d'un agent réducteur des NOx ou d'un précurseur dudit agent réducteur, comme l'urée de l'art antérieur. On attend également de cette composition qu'elle permette un dosage précis des quantités de composition injectées.

Le document DE 10 2008 041 903 décrit une composition pour le traitement des gaz d'échappement comprenant du NOx, cette composition aqueuse comprenant un agent réducteur des NOx ou un précurseur d'un agent réducteur des NOx et un solvant ayant un point de fusion inférieur à celui de la solution aqueuse. La composition est une émulsion à base d'hydrocarbure et d'une solution d'urée, la phase hydrocarbure formant la phase continue. Cette émulsion évite les effets du refroidissement de la solution d'urée tels que les problèmes de fluidité et les difficultés pour pomper cette solution.

Le document US 2003/0226312 décrit une composition aqueuse pour améliorer le traitement des gaz d'échappement, cette composition comprenant un composé métallique. La composition est introduite, soit dans la chambre de combustion sous forme d'une émulsion avec le carburant, soit en émulsion ou seule sous forme d'un flux aqueux dans le gaz d'échappement. Le composé métallique neutralise les produits secondaires de la combustion. Lorsqu'une émulsion est utilisée il s'agit d'une émulsion eau-dans-carburant.

Le document US 5,809,774 décrit un procédé pour réduire les émissions de NOx dans un moteur diesel, ce procédé comprenant la formation d'une émulsion d'une composition aqueuse d'un agent réducteur des NOx dans un carburant, la composition étant séparée (par décantation) en ses deux principaux constituants avant utilisation. La partie carburant est alors injectée dans le moteur et la solution aqueuse d'un agent réducteur des NOx est injectée dans les gaz d'échappement. Cette invention vise à réduire les équipements de stockage.

Le document JP2007-145796 décrit une composition aqueuse d'urée qui comprend moins de 100 ppm de guanidine, moins de 2000 ppm de biuret et moins de 50 ppm d'huile hydrocarbonée. L'huile hydrocarbonée est un contaminant issu de la composition lubrifiante mise en œuvre dans le compresseur.

Comme exposé ci-dessus, lorsque la distance entre l'injecteur et le catalyseur SCR est très courte, cela entraine un brassage d'air plus important et éventuellement un impact sur la température, avec pour conséquence des dépôts d'urée ou d'acide cyanurique dans le circuit ; ces conditions sont plus favorables à l'encrassement du circuit.

### Résumé de l'invention

L'invention concerne une composition aqueuse comprenant un agent réducteur des NOx ou un précurseur d'un agent réducteur des NOx, en particulier de l'urée, caractérisée en ce qu'elle comprend au moins une paraffine dispersée dans la phase aqueuse.

L'invention concerne plus particulièrement une composition aqueuse comprenant au moins un agent réducteur des NOx ou un précurseur d'un agent réducteur des NOx, au moins une paraffine et au moins un additif choisi parmi :
- les éthers d'hydrocarbyle et de mono ou de polyalkylène glycol,
- les éthers d'hydrocarbyle et de polyols,
- les esters d'acide gras et de mono ou de polyalkylène glycol,
- les esters d'acide gras et de mono ou de polyglycérol,
- les mélanges de ces composés,
caractérisée en ce que le pourcentage massique de paraffines en C₂₀-C₃₆ représente au moins 90% en masse par rapport à la masse totale de paraffines dans la composition.

Selon un mode de réalisation préféré, la teneur en agent réducteur des NOx ou en précurseur d'un agent réducteur des NOx dans la composition selon l'invention va de 20% à 60% en masse, de préférence de 30% à 50% en masse, encore plus préférentiellement de 30% à 35% en masse, et avantageusement de 32 à 33% en masse par rapport à la masse totale de la composition.

Selon un mode de réalisation préféré, le précurseur de l'agent réducteur des NOx est l'urée.

De préférence, selon ce mode de réalisation préféré, la teneur en urée va de 20% à 60% en masse, plus préférentiellement de 30% à 50% en masse, encore plus préférentiellement de 30% à 35% en masse, et avantageusement de 32 à 33% en masse par rapport à la masse totale de la composition.

Selon un mode de réalisation préféré, la paraffine représente de 5 à 10 000 ppm en masse de ladite composition et ledit additif représente de 5 à 10 000 ppm en masse de ladite composition.

Selon un autre mode de réalisation préféré, la paraffine représente de 1 à 80% en masse de ladite composition, de préférence de 1 à 40% en masse et l'additif représente de 1 à 40% en masse de ladite composition.

Selon un mode de réalisation préféré, les éthers d'hydrocarbyle et de mono ou de polyalkylène glycol sont représentés par les formules suivantes :
- les monoéthers d'hydrocarbyle mono- ou poly-alcoxylés de formule (I) :

   R-(Yᵢ)n-OH (I),
- les di-éthers d'hydrocarbyle mono- ou poly-alcoxylés de formule (II) :

   R'-(Yⱼ)m-OR" (II),
- les di-éthers d'hydrocarbyle mono- ou poly-alcoxylés de formule (III) :

   HO-(Yᵢ)n-R'''-(Yⱼ)m-OH (III),
- les mélanges de ces composés,
   ∘ R, R', R" représentent indépendamment des groupements alkyle ou alcényle ou alcynyle ou aryle ou aralkyle en C₃-C₄₀, R''' représente un groupement alcane diyle ou alcène diyle ou alcyne diyle ou un di-radical aryle ou un di-radical aralkyle en C₃-C₄₀,
   ∘ Yᵢ et Yⱼ sont des groupements choisis de façon indépendante parmi :
      -(O-CH₂-CH₂)-, -(O-CH(CH₃)-CH₂)- et -(O-CH₂-CH₂-CH₂)-, étant entendu que l'atome d'oxygène des groupements Yᵢ et Yⱼ se trouve toujours du côté du R, R', R" ou R''',
   ∘ n, m représentent un entier allant de 1 à 60, avantageusement de 1 à 30, encore mieux de 1 à 20.

Selon un mode de réalisation encore préféré, R, R', R" sont sélectionnés parmi les alkyles linéaires en C₈-C₃₀ et R''' est choisi parmi les alcane diyles linéaires en C₈-C₃₀.

Selon un mode de réalisation encore préféré, n et m représentent un entier allant de 3 à 15.

Selon un mode de réalisation encore préféré, dans les formules (I), (II) et (III) les groupements Yᵢ, Yⱼ représentent -(O-CH₂-CH₂)-.

Avantageusement, dans la formule (III) les groupements Yᵢ et Yⱼ représentent-(O-CH₂-CH₂)- et n=m.

Selon un mode de réalisation préféré, les éthers d'hydrocarbyle et de polyols sont choisis parmi les éthers d'un alkyle ou d'un alcényle en C₁-C₅₀, de préférence en C₃-C₄₀, plus avantageusement en C₅-C₃₂, encore mieux en C₈-C₃₀, et d'un polyol choisi parmi les polyglucosides cycliques.

Selon un mode de réalisation préféré, les esters d'acides gras et de mono ou de polyalkylène glycol résultent de la réaction d'au moins un acide gras comprenant 4 à 30 atomes de carbone, de préférence 8 à 30 atomes de carbone, plus avantageusement 8 à 24 atomes de carbone avec 1 à 60 unités alkylène glycol, préférentiellement 1 à 50 unités éthylène glycol.

Selon un mode de réalisation préféré, les esters d'acide gras et de mono ou de polyglycérol résultent de la réaction d'au moins un acide gras comprenant 4 à 30 atomes de carbone, de préférence 8 à 30 atomes de carbone, plus avantageusement 8 à 24 atomes de carbone avec 1 à 60 unités glycérol, préférentiellement 1 à 50 unités glycérol.

Selon un mode de réalisation préféré, le rapport massique des composés additifs choisis parmi les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol, par rapport à la ou les paraffines dans la composition est de 0,1:10 à 10 : 0,1, de préférence de 1 :10 à 10 :1, plus préférentiellement de 1 :10 à 1 :1.

Selon un mode de réalisation préféré, outre les composés additifs choisis parmi les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol, la composition comprend en outre au moins un tensioactif, et éventuellement un agent stabilisant des émulsions.

Selon un mode de réalisation préféré, la composition comprend en outre au moins un tensioactif non ionique choisi parmi les molécules hydrocarbonées oxygénées en C₄-C₂₀ comprenant un ou deux cycles furanose ou pyranose, et un ou plusieurs groupements hydroxyles, un au moins des groupements hydroxyles étant substitué par un groupement mono- ou poly-alcoxylé.

Selon un mode de réalisation encore préféré, le tensioactif non ionique est choisi parmi les sorbitanes polyéthoxylés et les isosorbides polyéthoxylés.

Selon un mode de réalisation préféré, la composition comprend en outre au moins un agent stabilisant des émulsions, choisi parmi les acides gras.

Selon un mode de réalisation préféré, la composition comprend en outre au moins un tensioactif non ionique choisi parmi les esters d'acides gras et de molécules hydrocarbonées oxygénées en C₄-C₂₀ comprenant un ou deux cycles furanose ou pyranose, et un ou plusieurs groupements hydroxyles, un au moins des groupements hydroxyles étant substitué par un groupement mono- ou poly-alcoxylé.

Selon un mode de réalisation encore préféré, le ou les tensioactifs non-ioniques sont choisis parmi les esters d'acides gras et de sorbitanes mono- ou poly-éthoxylés et les esters d'acide gras et d'isosorbides mono- ou poly-éthoxylés.

Selon un mode de réalisation préféré, la composition comprend au moins :
- un tensioactif non-ionique choisi parmi les molécules hydrocarbonées oxygénées en C₄-C₂₀ comprenant un ou deux cycles furanose ou pyranose, et un ou plusieurs groupements hydroxyles, un au moins des groupements hydroxyles étant substitué par un groupement mono- ou poly-alcoxylé,
- un stabilisant d'émulsion choisi notamment parmi les acides gras en C₈-C₃₀, et
- un tensioactif non-ionique choisi parmi les esters d'acides gras et de molécules hydrocarbonées oxygénées en C₄-C₂₀ comprenant un ou deux cycles furanose ou pyranose, et un ou plusieurs groupements hydroxyles, un au moins des groupements hydroxyles étant substitué par un groupement mono- ou poly-alcoxylé.

Selon un mode de réalisation préféré, la composition comprend au moins :
- un tensioactif non-ionique choisi parmi les molécules hydrocarbonées oxygénées en C₄-C₂₀ comprenant un ou deux cycles furanose ou pyranose, et un ou plusieurs groupements hydroxyles, un au moins des groupements hydroxyles étant substitué par un groupement mono- ou poly-alcoxylé,
- un stabilisant d'émulsion choisi notamment parmi les acides gras en C₈-C₃₀, et
- un tensioactif non-ionique choisi parmi les esters d'acides gras et de molécules hydrocarbonées oxygénées en C₄-C₂₀ comprenant un ou deux cycles furanose ou pyranose, et un ou plusieurs groupements hydroxyles.

Selon un mode de réalisation préféré, le rapport massique de l'ensemble des additifs, tensioactifs et stabilisants d'émulsions par rapport à la ou les paraffines dans la composition est compris de 0,1 :10 à 10:0,1, de préférence de 1:10 à 10:1, plus préférentiellement de 1:10 à 1:1.

L'invention concerne également l'utilisation d'une composition telle que décrite ci-dessus, pour le post-traitement des gaz d'échappement par catalyseur Réducteur Catalytique Sélectif (également désigné catalyseur SCR pour Selective Catalytic Reducer en anglais).

Selon un mode de réalisation préféré, ladite composition est utilisée pour prévenir, limiter, empêcher la formation de dépôts dans une ligne d'échappement SCR.

Selon un mode de réalisation préféré, ladite composition est utilisée pour éviter ou réduire le moussage lors de la manipulation de ladite composition pour son utilisation, son stockage et/ou son transport, par exemple lors des opérations de transvasement ou de remplissage de contenants tels que les bidons, les réservoirs de véhicule, les cuves de stockage ou les cuves de transport.

Selon un autre mode de réalisation préféré, ladite composition est utilisée pour prévenir, limiter, empêcher la formation de dépôts dans une ligne d'échappement SCR dite « close-coupled ».

La divulgation concerne également l'utilisation d'une composition telle que définie ci-dessus, pour éviter ou réduire le moussage lors du remplissage d'un réservoir par la composition.

La divulgation concerne également un procédé de traitement des gaz d'échappement dans un moteur à combustion interne, de préférence un moteur Diesel, équipé d'un système SCR, ce procédé étant caractérisé en ce qu'il comporte au moins une étape d'introduction d'une composition telle que décrite ci-dessus dans la ligne SCR, en amont du système SCR.

La divulgation concerne aussi un procédé de réduction des dépôts dans une ligne SCR, ce procédé étant caractérisé en ce qu'il comporte au moins une étape d'introduction d'une composition telle que décrite ci-dessus dans la ligne SCR, en amont du système SCR.

De préférence, ces procédés comprennent une étape de préparation d'une composition aqueuse telle que décrite ci-dessus et son introduction dans un réservoir destiné aux compositions aqueuses pour système SCR contenant un agent réducteur des NOx ou un précurseur d'un agent réducteur des NOx.

De préférence, ces procédés comprennent une étape de préparation d'une composition aqueuse concentrée dans laquelle la paraffine représente de 1 à 80% en masse de ladite composition, de préférence de 1 à 40% en masse et l'additif représente de 1 à 40% en masse de ladite composition, et l'introduction de cette composition, soit dans un premier réservoir comprenant une composition aqueuse pour système SCR contenant un agent réducteur des NOx ou un précurseur d'un agent réducteur des NOx, soit dans un second réservoir, distinct du premier réservoir, les deux réservoirs alimentant ledit système SCR.

Les compositions de l'invention présentent de nombreux avantages : elles sont utilisables de la même façon et dans les mêmes équipements que les solutions de l'art antérieur. Elles sont au moins aussi efficaces, voire pour certaines plus efficaces, que les solutions de l'art antérieur, notamment les solutions à base d'urée dans la réduction ou la prévention de la formation de dépôts dans les systèmes SCR, en particulier dans les configurations dites « close-coupled ». Elles n'entrainent pas ou peu de moussage lors de leur manipulation et permettent donc d'éviter les débordements lors du remplissage du réservoir comparativement aux solutions d'urée additivées de l'art antérieur. Elles sont stables au stockage. Elles permettent un contrôle précis de la quantité de composition injectée.

### Description détaillée

L'invention repose sur la mise au point de compositions aqueuses comprenant un agent réducteur des NOx ou un précurseur d'un agent réducteur des NOx, en particulier de l'urée, et comprenant en outre une ou plusieurs paraffines dispersées dans ladite composition, ainsi qu'un ou plusieurs composés de type éther ou ester mono ou polyalcoxylés ou mono ou polyglycérolés. Cette dispersion est avantageusement stabilisée au moyen d'un ou de plusieurs tensioactifs, préférentiellement non-ioniques.

Dans la présente demande, les termes « dispersion » ou « dispersées », employés pour désigner des compositions aqueuses comprenant la paraffine incluent aussi des émulsions, des suspensions, et plus généralement toute forme de composition dans laquelle la paraffine et l'eau forment un mélange sensiblement homogène.

### L'agent réducteur des NOx ou le précurseur dudit agent :

La composition est préparée à partir d'une solution aqueuse comprenant au moins un agent réducteur des NOx ou au moins un précurseur dudit agent.

Par « agent réducteur des NOx », on entend un composé capable de réduire au moins partiellement, sinon en totalité, les NOx en ammoniaque gazeux, dans les conditions de fonctionnement d'une ligne SCR, c'est à dire à une température allant de 150 à 400°C. Parmi les agents réducteurs des NOx, ont peut citer l'ammoniaque ou encore l'acide cyanurique HNCO.

Par « précurseur d'un agent réducteur des NOx » on entend un composé susceptible de libérer l'agent réducteur des NOx sous l'effet de la température et/ou par réaction catalytique. Parmi les précurseurs d'ammoniaque, on peut citer l'urée qui par réaction d'hydrolyse produit de l'ammoniaque (agent réducteur des NOx) selon un procédé bien connu. Une ligne d'échappement SCR peut comprendre, en amont du système catalytique SCR, un catalyseur dont la fonction est de transformer un précurseur d'un agent réducteur des NOx en agent réducteur des NOx, notamment en ammoniaque gazeux.

La teneur en agent réducteur des NOx ou en précurseur d'un agent réducteur des NOx va, de préférence, de 20% à 60% en masse, plus préférentiellement de 30% à 50% en masse, encore plus préférentiellement de 30% à 35% en masse, et avantageusement de 32% à 33%, par rapport à la masse totale de la composition.

Avantageusement, la composition est préparée à partir d'une solution aqueuse d'urée. En effet, l'urée présente l'avantage d'être stable, non volatile, non explosive et non inflammable. Elle peut être transportée sans risque, stockée et manipulée par un opérateur sans formation spécifique.

La teneur en urée va, de préférence, de 20% à 60% en masse, plus préférentiellement de 30% à 50% en masse, encore plus préférentiellement de 30% à 35% en masse, et avantageusement de 32% à 33% en masse, par rapport à la masse totale de la composition.

Habituellement, la solution mise en œuvre dans les lignes SCR comprend 32,5% massique d'urée, de façon à satisfaire la norme ISO 22241-1 concernant la réduction des NOx dans les moteurs Diesel.

Pour cette utilisation, on prévoit donc que la composition présente une concentration en urée sensiblement égale à 32,5% massique. Toutefois, il entre également dans la portée de la présente invention de préparer des compositions aqueuses à base d'urée de concentration supérieure à 32,5%, que l'on dilue avant mise en œuvre. Cette variante permet de réaliser des économies lors du transport de ces compositions à base d'urée.

### Les paraffines :

La composition comprend en outre au moins une paraffine.

Les paraffines sont des alcanes, dont la formule brute est CₙH₂ₙ₊₂, avec n un entier allant de 8 à 40. Elles incluent les paraffines normales (linéaires) et les isoparaffines (ramifiées). Elles peuvent être liquides, pâteuses ou solides. De préférence, on choisit des paraffines en C₂₀-C₃₆. Dans la composition de l'invention, les paraffines en C₂₀-C₃₆ représentent au moins 90% massiques de la totalité des paraffines de la composition. Encore mieux, les paraffines en C₂₂-C₃₂ représentent au moins 90% massiques de la totalité des paraffines de la composition.

De préférence, les paraffines en C₂₀-C₃₆ représentent au moins 95% massiques de la totalité des paraffines de la composition. Encore mieux, les paraffines en C₂₂-C₃₂ représentent au moins 95% massiques de la totalité des paraffines de la composition.

La paraffine représente de 5 à 10 000 ppm en masse de ladite composition, de préférence de 50 à 5 000 ppm en masse, plus préférentiellement de 100 à 2 500 ppm en masse.

### Les additifs :

La composition aqueuse comprenant au moins un agent réducteur des NOx ou un précurseur d'un agent réducteur des NOx, et au moins une paraffine, comprend selon l'invention au moins un additif choisi parmi :
- les éthers d'hydrocarbyle et de mono ou de polyalkylène glycol,
- les éthers d'hydrocarbyle et de polyols,
- les esters d'acide gras et de mono ou de polyalkylène glycol
- les esters d'acide gras et de mono ou de polyglycérol,
- les mélanges de ces composés.

Par « hydrocarbyle », on entend selon l'invention un groupement choisi parmi un alkyle, un alcényle, un alcynyle, un aryle, un aralkyle, avantageusement l'hydrocarbyle est un groupement en C1-C50.

Par « alkyle en Cᵢ-Cⱼ » on entend une chaîne hydrocarbonée saturée, linéaire, ramifiée ou cyclique, comprenant de i à j atomes de carbone.

Par « alcényle en Cₓ-C_{y} », on entend une chaîne hydrocarbonée, linéaire, ramifiée ou cyclique comportant au moins une double liaison carbone-carbone, et comprenant de x à y atomes de carbone.

Par « alcynyle en Cₓ-C_{y} », on entend une chaîne hydrocarbonée linéaire, ramifiée ou cyclique comportant au moins une triple liaison carbone-carbone, et comprenant de x à y atomes de carbone.

Par « aryle en Cₓ-C_{y} », on entend un groupe fonctionnel qui dérive d'un composé hydrocarboné aromatique comprenant de x à y atomes de carbone. Ce groupe fonctionnel peut être monocyclique ou polycyclique. A titre illustratif, un aryle en C₆-C₁₈ peut être le phényle, le naphtalène, l'anthracène, le phénanthrène et le tétracène.

Par « aralkyle en Cₓ-C_{y} », on entend un composé hydrocarboné aromatique, de préférence monocyclique, substitué par au moins une chaîne alkyle linéaire ou ramifiée et dont le nombre total d'atomes de carbone du cycle aromatique et de ses substituants va de x à y atomes de carbone. A titre illustratif un aralkyle en C₇-C₁₈ peut être choisi dans le groupe formé par le benzyle, le tolyle et le xylyle.

Par polyol, on entend au sens de la présente invention un composé hydrocarboné oxygéné comprenant au moins deux fonctions alcool, et éventuellement une ou plusieurs autres fonctions oxygénées, comme par exemple une fonction acétal, un pont éther, un pont ester.

Par acide gras, on entend au sens de la présente invention un composé hydrocarboné comprenant une chaine alkyle ou alcényle en C₄-C₅₀, linéaire ou ramifiée, saturée ou instaurée, et une fonction acide carboxylique en extrémité de chaine.

L'additif représente de 5 à 10 000 ppm en masse de ladite composition, de préférence de 50 à 5 000 ppm en masse, plus préférentiellement de 100 à 2 500 ppm en masse.

Selon un mode de réalisation particulier, la composition aqueuse peut être un mélange d'additifs choisi parmi :
- les éthers d'hydrocarbyle et de mono ou de polyalkylène glycol,
- les éthers d'hydrocarbyle et de polyols,
- les esters d'acide gras et de mono ou de polyalkylène glycol et,
- les esters d'acide gras et de mono ou de polyglycérol.

Chaque additif peut représenter de 5 à 10 000 ppm en masse de ladite composition, de préférence de 50 à 5 000 ppm en masse, plus préférentiellement de 100 à 2 500 ppm en masse.

Selon une variante de ce mode de réalisation, le mélange d'additifs représente de 5 à 10 000 ppm en masse de ladite composition, de préférence de 50 à 5 000 ppm en masse, plus préférentiellement de 100 à 2 500 ppm en masse.

### - Les éthers d'hydrocarbyle et de mono ou de polyalkylène glycol

Les éthers d'hydrocarbyle et de mono ou de polyalkylène glycol peuvent être des mono éthers ou des diéthers, suivant si la chaine polyalkylène glycol est substituée sur une ou deux extrémités par un groupement hydrocarbyle.

Les éthers d'hydrocarbyle et de mono ou de polyalkylène glycol sont avantageusement choisis parmi ceux comprenant un groupement hydrocarbyle en C₁-C₅₀ et de 1 à 60 unités alkylène glycol.

Les éthers d'hydrocarbyle et de mono ou de polyalkylène glycol sont avantageusement représentés par les formules suivantes :
- les monoéthers d'hydrocarbyle mono- ou poly-alcoxylés de formule (I) :

   R-(Yᵢ)n-OH (I),
- les di-éthers d'hydrocarbyle mono- ou poly-alcoxylés de formule (II) :

   R'-(Yⱼ)m-OR" (II),
- les di-éthers d'hydrocarbyle mono- ou poly-alcoxylés de formule (III) :

   HO-(Yᵢ)n-R'''-(Yⱼ)m-OH (III),
- les mélanges de ces composés.
   o R, R', R" représentent indépendamment des groupements alkyle ou alcényle ou alcynyle ou aryle ou aralkyle en C₃-C₄₀, R'" représente un groupement alcane diyle ou alcène diyle ou alcyne diyle ou un di-radical aryle ou un di-radical aralkyle en C3-C40.
      Pour faciliter la description, on emploiera dans la suite la même désignation de radical alkyle ou alcényle ou alcynyle ou aryle ou aralkyle pour un mono radical (R, R', R") et pour un di-radical (R''').
   ∘ Yᵢ et Yⱼ sont des groupements choisis de façon indépendante parmi :
      -(O-CH₂-CH₂)-, -(O-CH(CH₃)-CH₂)- et -(O-CH₂-CH₂-CH₂)-.étant entendu que l'atome d'oxygène des groupements Yᵢ et Yⱼ se trouve toujours du côté du R, R', R" ou R''',
      Dans une molécule (I), (II) ou (III), les groupements Yᵢ, respectivement Yⱼ, peuvent être tous identiques ou peuvent être différents. Par exemple, -(Yᵢ)n- peut représenter un copolymère à motifs oxyde d'éthylène et oxyde de propylène, comme par exemple un copolymère bloc.
      De préférence, dans les formules (I) à (III), les groupements Yᵢ, respectivement Yⱼ, sont tous identiques.
      De façon encore préférée, dans les formules (I) à (III), les groupements Yᵢ, respectivement Yⱼ, sont tous l'oxyde d'éthylène -(O-CH₂-CH₂)-.
   ∘ n, m représentent le degré d'alcoxylation de la molécule, soit un entier allant de 1 à 60, avantageusement de 1 à 30, encore mieux de 1 à 20. Les entiers i et j sont les indices respectivement des groupements Yᵢ et Yⱼ, variant de 1 à n et de 1 à m.

Avantageusement n et m varient de 3 à 15, encore mieux de 5 à 10.

Avantageusement, dans la formule (III) les groupements Yᵢ et Yⱼ représentent - (O-CH₂-CH₂)- et n=m.

Selon un premier mode de réalisation, dans les formules (I), (II) et (III), avantageusement :
R, R', R" et R'" sont choisis parmi les chaines alkyle et alcényle, linéaires ou ramifiées.

Encore plus avantageusement, R, R', R" et R''' sont choisis parmi les chaines alkyles.

De façon préférée, R, R', R" et R''' sont choisis parmi les chaines linéaires.

De façon encore plus avantageuse, R, R', R" et R'" sont choisis parmi les chaines alkyles en C₅-C₃₂, encore mieux en C₈-C₃₀.

Encore plus avantageusement, ce mode de réalisation concerne les formules (I) et (II).

Parmi les composés de formule (I) disponibles commercialement on peut citer : les produits de la gamme Marlipal® et ceux de la gamme Surfaline®.

Selon un second mode de réalisation, R, R', R" et R''' sont choisis parmi les alcynyles en C₄-C₅₀.

Avantageusement, ce mode de réalisation concerne la formule (III), dans laquelle R''' est un alcynyle en C₄-C₅₀.

Par exemple, selon ce mode de réalisation, le composé de formule (III) peut être représenté par la formule (IV) ci-dessous : 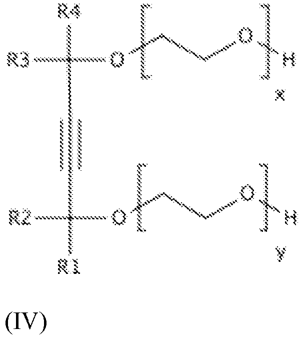 dans laquelle R1, R2, R3, R4 représentent indépendamment H ou un alkyle en C₁-C₂₀ et x et y représentent indépendamment un entier allant de 1 à 60, encore mieux de 1 à 30.

Un exemple d'un produit commercial répondant à cette formule est le Sufynol 104 ® commercialisé par la société Air Product.

Selon un troisième mode de réalisation, R, R', R" et R'" sont choisis parmi les aralkyles comprenant de 9 à 30 atomes de carbone, dont au moins un cycle aromatique et une chaine alkyle.

Avantageusement, ce mode de réalisation concerne la formule (I), dans laquelle R représente un groupement choisi parmi les aralkyles comprenant de 9 à 30 atomes de carbone, dont au moins un cycle aromatique et une chaine alkyle.

Encore plus avantageusement, R est choisis parmi les para alkylphényle comprenant un groupement alkyle en C₁-C₂₄, encore mieux, en C₃-C₂₀, avantageusement encore en C₅-C₁₈.

Par exemple, selon ce mode de réalisation, le composé de formule (I) peut être représenté par la formule (V) ci-dessous : 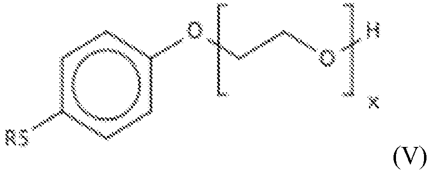 dans laquelle R5 représente un groupement alkyle en C₁-C₂₄, encore mieux, en C₃-C₂₀, avantageusement encore en C₅-C₁₈ et x représente un entier allant de 1 à 50, avantageusement de 1 à30.

Un exemple d'un tel composé est le produit Dynol 800 ® commercialisé par la société Air Product.

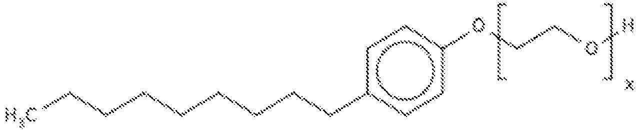

Les composés (I) sont des mélanges obtenus par réaction de composés alcools ROH avec n unités d'oxyde d'éthylène et/ou d'oxyde de propylène. n représente le nombre de moles d'oxyde d'alkylène que l'on a fait réagir avec une mole d'alcool ROH.

Les composés (II) sont des mélanges obtenus par réaction de composés alcools R'OH avec m unités d'oxyde d'éthylène et/ou d'oxyde de propylène suivis d'une réaction d'étherification avec un composé alcool R"OH. m représente le nombre de moles d'oxyde d'alkylène que l'on a fait réagir avec une mole d'alcool R'OH.

Les composés (III) sont obtenus par réaction d'un diol HO- R'"-OH avec (n+m) unités d'oxyde d'éthylène et/ou d'oxyde de propylène. Avantageusement dans la formule (III) : n=m. (m+n) représente le nombre de moles d'oxyde d'alkylène que l'on a fait réagir avec une mole de diol HO-R'''-OH.

Les composés de formule (I), (II) et (III) sont généralement sous forme de mélanges de composés présentant des degrés d'alcoxylation variés.

### - Les éthers d'hydrocarbyle et de polyols

Les éthers d'hydrocarbyle et de polyols sont avantageusement choisis parmi les éthers d'un alkyle ou d'un alcényle en C₁-C₅₀, de préférence en C₃-C₄₀, plus avantageusement en C₅-C₃₂, encore mieux en C₈-C₃₀, et d'un polyol.

Avantageusement, selon une première variante, le polyol est choisi parmi les composés appartenant à la famille des glucides et leurs oligomères. En particulier, le polyol est choisi parmi les composés glucidiques cycliques, comme par exemple les oligomères de β-D-glucopyranose. L'invention concerne notamment les éthers d'hydrocarbyle et de polyglucoside cyclique.

Parmi les éthers d'hydrocarbyle et de polyglucoside cyclique on peut citer les alkyl polyglucosides tels que le produit commercialisé sous le nom Triton CG650® par la société DOW Chemical.

Avantageusement, selon une seconde variante, le polyol est le glycérol ou un oligomère de glycérol, par exemple un oligomère comprenant 2 à 30 unités glycérol, de préférence de 3 à 20 unités glycérol.

### - Les esters d'acide gras et de mono ou de polyalkylène glycol

Les esters d'acides gras et de mono ou de polyalkylène glycol sont des molécules résultant de la réaction d'au moins un acide gras avec 1 à 60 unités alkylène glycol, préférentiellement 1 à 50 unités alkylène glycol. Avantageusement, ils sont issus de la réaction d'un acide gras avec 1 à 50 unités éthylène glycol.

Les acides gras sont généralement des molécules comprenant une chaine alkyle ou alcényle, porteuse à son extrémité d'une fonction acide carboxylique, et comprenant 4 à 30 atomes de carbone, de préférence en 8 à 30 atomes de carbone, plus avantageusement 8 à 24 atomes de carbone.

Le groupement acide gras peut être une molécule unique ou un mélange correspondant à la distribution en acides gras d'une huile animale ou végétale.

Parmi les acides gras, on peut citer de façon non limitative, un acide gras saturé tel que l'acide n-caproïque, l'acide caprylique, l'acide n-caprique, l'acide laurique, l'acide myristique, l'acide palmitique, l'acide stéarique, l'acide isostéarique, l'acide arachidique ou un acide gras insaturé tel que l'acide palmitoléique, l'acide oléique, l'acide linoléique, l'acide linolénique, l'acide arachidonique ou l'acide docosahexaénoïque.

Les esters d'acides gras et de mono ou de polyalkylène glycol comprennent avantageusement de 3 à 50, encore mieux de 5 à 40 unités oxyde d'alkylène. Encore mieux, les esters d'acides gras et de mono ou de polyalkylène glycol comprennent de 3 à 50, avantageusement de 5 à 40 unités oxyde d'éthylène.

Comme exemples d'esters d'acides gras et de polyalkylène glycols on peut citer le produit DUB S PEG 30S (stéarate de PEG-30) commercialisé par la société Stéarinerie Dubois.

### - Les esters d'acide gras et de mono ou de polyglycérol

Les esters d'acides gras et de mono ou de polyglycérol sont des molécules résultant de la réaction d'au moins un acide gras avec 1 à 60 unités alkylène glycol, préférentiellement 1 à 50 unités glycérol.

Les acides gras sont identiques à ceux décrits ci-dessus.

Les esters d'acides gras et de mono ou de polyglycérol comprennent avantageusement de 3 à 50, encore mieux de 5 à 40 unités glycérol.

Comme exemples d'esters d'acides gras et de polyglycérol on peut citer le produit Polyaldo 10-1-0 KFG ® (laurate de polyglycérol) commercialisé par la société LONZA.

De préférence, le rapport massique des composés additifs choisis parmi les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol, par rapport à la ou les paraffines dans la composition est de 0,1: 10 et 10 : 0,1, de préférence de 1 :10 et 10 :1, plus préférentiellement entre 1 :10 et 1 :1.

Avantageusement, les additifs choisis parmi :
- les éthers d'hydrocarbyle et de mono ou de polyalkylène glycol,
- les éthers d'hydrocarbyle et de polyols,
- les esters d'acide gras et de mono ou de polyalkylène glycol,
- les esters d'acide gras et de mono ou de polyglycérol,
représentent de 1 à 100% massique par rapport à la masse totale de paraffines dans la composition.

Encore plus avantageusement, ils représentent de 1 à 70% massique par rapport à la masse totale de paraffines dans la composition, plus préférentiellement de 1 à 50% massique par rapport à la masse totale de paraffines dans la composition.

L'additif est, de préférence, choisi parmi les éthers d'hydrocarbyle et de mono ou de polyalkylène glycol, encore plus avantageusement parmi les monoéthers d'hydrocarbyle mono- ou poly-alcoxylés de formule (I).

De façon surprenante, les inventeurs ont constaté que la présence de la paraffine et des composés additifs décrits ci-dessus permettait de formuler des compositions aqueuses comprenant un agent réducteur des NOx ou un précurseur d'un agent réducteur des NOx, tel que de l'urée, qui forment moins de dépôts par rapport aux compositions de l'art antérieur. Par ailleurs, ces compositions entrainent la formation de moindres volumes de mousse par rapport aux compositions de l'art antérieur.

L'action conjointe des deux additifs est donc extrêmement bénéfique pour l'efficacité des compositions aqueuses comprenant un agent réducteur des NOx ou un précurseur d'un agent réducteur des NOx tel que de l'urée.

### Le système tensioactif :

Outre les composés additifs décrits ci-dessus, la composition aqueuse comprend avantageusement au moins un système tensioactif additionnel qui permet de maintenir la paraffine sous forme dispersée. Le système tensioactif additionnel permet de former une émulsion de paraffine dans l'eau.

De préférence le système tensioactif comprend au moins un tensioactif non-ionique.

### - Première variante :

Selon une première variante, le ou les tensioactifs non-ioniques sont choisis parmi les molécules hydrocarbonées oxygénées en C₄-C₂₀ comprenant un ou deux cycles furanose ou pyranose, et un ou plusieurs groupements hydroxyles, un au moins des groupements hydroxyles étant substitué par un groupement mono- ou poly-alcoxylé.

On entend par molécule hydrocarbonée oxygénée, une chaine constituée exclusivement d'atomes de carbone, d'hydrogène et d'oxygène, ladite chaine pouvant être linéaire ou ramifiée, cyclique, polycyclique ou acyclique, saturée ou insaturée, et éventuellement aromatique ou polyaromatique. Une chaine hydrocarbonée oxygénée peut comprendre une partie linéaire ou ramifiée et une partie cyclique. Elle peut comprendre une partie aliphatique et une partie aromatique.

Selon l'invention les molécules hydrocarbonées oxygénées sont avantageusement saturées.

Selon l'invention les molécules hydrocarbonées oxygénées comprennent avantageusement une partie linéaire et une partie cyclique.

La partie cyclique peut être monocyclique ou polycyclique.

Selon l'invention, les carbones des groupements mono- ou poly-alcoxylés ne sont pas comptés dans la molécule hydrocarbonée oxygénée en C₄-C₂₀.

Avantageusement, les tensioactifs non-ioniques sont choisis parmi les molécules hydrocarbonées oxygénées en C₄-C₁₀ comprenant un ou deux cycles furanose ou pyranose, et un ou plusieurs groupements hydroxyles, un au moins des groupements hydroxyles étant substitué par un groupement mono- ou poly-alcoxylé.

De préférence, les tensioactifs mis en œuvre présentent un degré d'alcoxylation moyen allant de 1 à 80, mieux de 1 à 50, encore mieux de 5 à 25 et avantageusement de 10 à 20.

Généralement, les groupements mono- ou poly-alcoxylés sont formés par réaction de condensation d'oxyde d'alkylène sur la molécule cyclique porteuse de fonctions hydroxyle. Il peut s'agir de groupements oxyde d'éthylène, oxyde de propylène ou de mélanges de ces monomères qui forment des copolymères d'oxyde d'éthylène et d'oxyde de propylène, éventuellement des polymères blocs.

Le greffage de groupements alcoxylés sur les fonctions hydroxyles peut se faire par réaction de condensation sur une fonction hydroxyle ou sur plusieurs fonctions hydroxyles de la molécule, en fonction du nombre de fonction hydroxyles présentes, de leur réactivité, et des conditions réactionnelles. En général, on définit le degré d'alcoxylation moyen comme le nombre de moles d'oxyde d'alkylène que l'on a fait réagir avec la molécule à greffer

Le système tensioactif peut aussi comprendre des polymères et copolymères polyoxyde d'alkylène, en particulier des polyoxydes d'éthylène, des polyoxydes de propylène, des copolymères d'oxyde d'éthylène et d'oxyde de propylène, éventuellement des polymères blocs, ou des mélanges de ces polymères. Ces polymères se forment parfois en parallèle du greffage des oxydes d'alkylène sur les fonctions hydroxyles de la molécule hydrocarbonée oxygénée en C₄-C₂₀ et subsistent en mélange avec ceux-ci. Les produits commerciaux du type molécule hydrocarbonée oxygénée en C₄-C₂₀ porteuse de fonctions hydroxyles greffées par des oxydes d'alkylène comprennent généralement des quantités mineures de ces polymères et copolymères polyoxyde d'alkylène.

De préférence, le ou les tensioactifs non-ioniques sont choisis parmi les sorbitanes mono- ou poly-alcoxylés et les isosorbides mono- ou poly-alcoxylés ainsi que leurs mélanges. Encore plus préférentiellement, le ou les tensioactifs non-ioniques sont choisis parmi les sorbitanes mono- ou poly-éthoxylés et les isosorbides mono- ou poly-éthoxylés, ainsi que leurs mélanges. Ceux-ci peuvent être représentés par les formules (VI) et (VII) suivantes :

### - Sorbitanes éthoxylés :

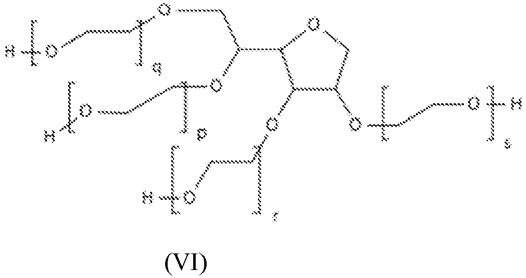

Avec p, q, r et s identiques ou différents, des entiers allant de 0 à 20, la somme r+s+p+q allant de 1 à 80, de préférence de 1 à 50.

### - Isosorbides éthoxylés :

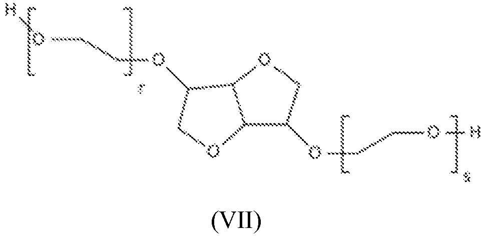

Avec r, s, identiques ou différents, des entiers allant de 0 à 20, la somme r+s allant de 1 à 40.

De préférences, les sorbitanes mono- ou poly-éthoxylés et les isosorbides mono- ou poly-éthoxylés mis en œuvre présentent un degré d'alcoxylation moyen allant de 1 à 50, avantageusement de 5 à 25 et encore plus préférentiellement de 10 à 20.

Selon cette variante, la composition comprend en outre avantageusement au moins un ou plusieurs stabilisants d'émulsion. De façon connue, ces stabilisants d'émulsion peuvent être choisis notamment parmi les acides gras en C₈-C₃₀, saturés ou insaturés, ainsi que leurs mélanges.

Le ou les acides gras peuvent être saturés ou insaturés et peuvent être linéaires ou ramifiés, et leur nombre de carbones peut être de 8 à 30, de préférence de 10 à 24. L'acide gras peut par exemple être un acide gras saturé tel que l'acide n-caproïque, l'acide caprylique, l'acide n-caprique, l'acide laurique, l'acide myristique, l'acide palmitique, l'acide stéarique, l'acide isostéarique, l'acide arachidique ou un acide gras insaturé tel que l'acide palmitoléique, l'acide oléique, l'acide linoléique, l'acide linolénique, l'acide arachidonique ou l'acide docosahexaénoïque. L'acide stéarique, l'acide myristique et l'acide palmitique sont des exemples d'acides gras préférés. De préférence le stabilisant d'émulsion est choisi parmi les mélanges d'acides gras en C₁₀-C₂₄, encore plus préférentiellement en C₁₂-C₂₀.

Avantageusement l'invention met en œuvre un mélange d'acides gras comprenant l'acide stéarique, l'acide myristique et l'acide palmitique. De préférence, l'invention met en œuvre un mélange d'acides gras essentiellement constitué de l'acide stéarique, de l'acide myristique et de l'acide palmitique.

Selon cette première variante, de façon préférée, le système tensioactif consiste essentiellement en :
- une ou plusieurs molécules hydrocarbonées oxygénées en C₄-C₂₀ comprenant un ou deux cycles furanose ou pyranose, et un ou plusieurs groupements hydroxyles, un au moins des groupements hydroxyles étant substitué par un groupement mono- ou poly-alcoxylé,
- un ou plusieurs stabilisants d'émulsion choisis parmi les acides gras en C₈-C₃₀ et leurs mélanges.

Encore plus préférentiellement, selon cette variante, le système tensioactif consiste essentiellement en :
- une ou plusieurs molécules choisies parmi les sorbitanes mono- ou poly-éthoxylés et les isosorbides mono- ou poly-éthoxylés,
- un ou plusieurs stabilisants d'émulsion choisis parmi les acides gras en C₁₀-C₂₄ et leurs mélanges.

De façon avantageuse, selon cette variante, le système tensioactif consiste essentiellement en :
- une ou plusieurs molécules choisies parmi les sorbitanes mono- ou poly-éthoxylés de formule (VI) et les isosorbides mono- ou poly-éthoxylés de formule (VII), tels que définis ci-dessus,
- un ou plusieurs stabilisants d'émulsion choisis parmi les acides gras en C₁₂-C₂₀ et leurs mélanges.

### - Seconde variante :

Selon une seconde variante, le ou les tensioactifs non-ioniques sont choisis parmi les esters d'acides gras et de molécules hydrocarbonées oxygénées en C₄-C₂₀ comprenant un ou deux cycles furanose ou pyranose, et un ou plusieurs groupements hydroxyles, un au moins des groupements hydroxyles étant substitué par un groupement mono- ou poly-alcoxylé. L'acide gras peut être greffé sur un groupement hydroxyle du cycle ou en extrémité d'une chaine alcoxylée.

Selon l'invention les molécules hydrocarbonées oxygénées sont avantageusement saturées.

Selon l'invention les molécules hydrocarbonées oxygénées comprennent avantageusement une partie linéaire et une partie cyclique.

La partie cyclique peut être monocyclique ou polycyclique.

Selon l'invention, les carbones des groupements mono- ou poly-alcoxylés ne sont pas comptés dans la molécule hydrocarbonée oxygénée en C₄-C₂₀.

Avantageusement, les tensioactifs non-ioniques sont choisis parmi les esters d'acides gras et de molécules hydrocarbonées oxygénées en C₄-C₁₀ comprenant un ou deux cycles furanose ou pyranose, et un ou plusieurs groupements hydroxyles, un au moins des groupements hydroxyles étant substitué par un groupement mono- ou poly-alcoxylé. De préférence, les tensioactifs mis en œuvre présentent un degré d'alcoxylation moyen allant de 1 à 80, mieux de 1 à 50, encore mieux de 5 à 25, et avantageusement de 10 à 20.

Généralement, les groupements mono- ou poly-alcoxylés sont formés par réaction de condensation d'oxyde d'alkylène sur la molécule cyclique porteuse de fonctions hydroxyle. Il peut s'agir de groupements oxyde d'éthylène, oxyde de propylène ou de mélanges de ces monomères qui forment des copolymères d'oxyde d'éthylène et d'oxyde de propylène, éventuellement des polymères blocs.

Le greffage de groupements alcoxylés sur les fonctions hydroxyles peut se faire par réaction de condensation sur une fonction hydroxyle ou sur plusieurs fonctions hydroxyles de la molécule, en fonction du nombre de fonction hydroxyles présentes, de leur réactivité, et des conditions réactionnelles. En général, on définit le degré d'alcoxylation moyen comme le nombre de moles d'oxyde d'alkylène que l'on a fait réagir avec la molécule à greffer.

Le système tensioactif peut aussi comprendre des polymères et copolymères polyoxyde d'alkylène, en particulier des polyoxydes d'éthylène, des polyoxydes de propylène, des copolymères d'oxyde d'éthylène et d'oxyde de propylène, éventuellement des polymères blocs, ou des mélanges de ces polymères. Ces polymères se forment parfois en parallèle du greffage des oxydes d'alkylène sur les fonctions hydroxyles de la molécule hydrocarbonée oxygénée en C₄-C₂₀ et subsistent en mélange avec ceux-ci. Les produits commerciaux du type molécule hydrocarbonée oxygénée en C₄-C₂₀ porteuse de fonctions hydroxyles greffées par des oxydes d'alkylène comprennent généralement des quantités mineures de ces polymères et copolymères polyoxyde d'alkylène.

Le système tensioactif peut éventuellement comprendre des quantités mineures des esters d'acides gras et de ces polymères et copolymères polyoxyde d'alkylène.

Le nombre de molécules d'acides gras qui a réagi avec la molécule hydrogénée oxygénée en C₄-C₂₀ peut être supérieur à 1. L'ester peut ainsi être un monoester, un diester, un triester, un tétraester. Dans le cas où la molécule est un polyester, des groupements acides gras distincts peuvent avoir réagi avec des groupements hydroxyle distincts. De préférence l'ester est un monoester.

Le fragment acide gras de l'ester d'acide gras et de sorbitane alcoxylé peut être saturé ou insaturé et peut être linéaire ou ramifié, et son nombre de carbones peut être de 8 à 30, de préférence de 10 à 24, encore mieux de 12 à 20. L'acide gras peut par exemple être un acide gras saturé tel que l'acide n-caproïque, l'acide caprylique, l'acide n-caprique, l'acide laurique, l'acide myristique, l'acide palmitique, l'acide stéarique, l'acide isostéarique, l'acide arachidique ou un acide gras insaturé tel que l'acide palmitoléique, l'acide oléique, l'acide linoléique, l'acide linolénique, l'acide arachidonique ou l'acide docosahexaénoïque. L'acide stéarique, l'acide myristique et l'acide palmitique sont des exemples d'acides gras préférés.

Avantageusement l'invention met en œuvre un mélange d'esters d'acides gras à base d'un mélange d'acides comprenant de l'acide stéarique, de l'acide myristique et de l'acide palmitique. De préférence, l'invention met en œuvre un mélange d'esters d'acides gras à base d'un mélange d'acides constitué de l'acide stéarique, de l'acide myristique et de l'acide palmitique.

Selon cette variante, de préférence, le ou les tensioactifs non-ioniques sont choisis parmi les esters d'acides gras et de sorbitanes mono- ou poly-alcoxylés ou d'isosorbides mono- ou poly-alcoxylés.

De préférences, les esters d'acides gras et de sorbitanes mono- ou poly-alcoxylés et les isosorbides mono- ou poly-alcoxylés mis en œuvre présentent un degré d'alcoxylation moyen allant de 1 à 80, mieux de 1 à 50, avantageusement de 5 à 25, et avantageusement de 10 à 20.

Selon cette variante, encore plus avantageusement, le ou les tensioactifs non-ioniques sont choisis parmi les esters d'acides gras et de sorbitanes mono- ou poly-éthoxylés ou d'isosorbides mono- ou poly-éthoxylés.

Ces molécules sont représentées par les formules (VIII) et (IX) ci-dessous :
- Esters d'acides gras et de sorbitanes éthoxylés : 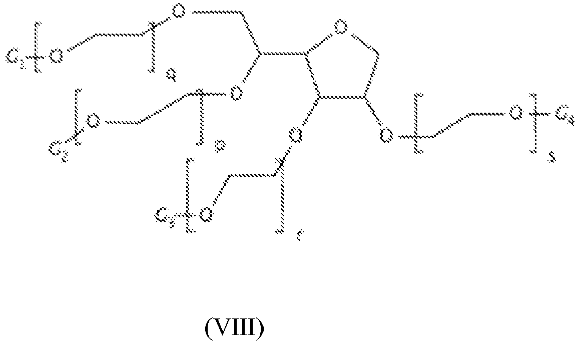
   Avec p, q, r et s, identiques ou différents, des entiers allant de 0 à 20, la somme r+s+p+q allant de 1 à 80, de préférence de 1 à 50.
   G1, G2, G3, G4 représentent indépendamment un atome d'hydrogène ou un groupement alkylcarboxylique en C₈-C₃₀, l'un au moins de G1, G2, G3, G4 étant distinct de H.
- Esters d'acides gras et d'isosorbides éthoxylés :

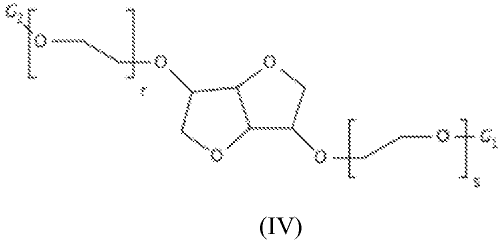

Avec r, s, identiques ou différents, des entiers allant de 0 à 20, la somme r+s allant de 1 à 40 ; G1, G2 représentent indépendamment un atome d'hydrogène ou un groupement alkylcarboxylique en C₈-C₃₀, l'un au moins de G1 et G2 étant distinct de H.

De telles molécules sont disponibles commercialement notamment sous le nom Polysorbate ou sous la marque Radiasurf ® commercialisée par la société Oleon.

Selon cette seconde variante, de façon préférée, le système tensioactif consiste essentiellement en :
Un ou plusieurs esters d'acides gras et de molécules hydrocarbonées oxygénées en C₄-C₂₀ comprenant un ou deux cycles furanose ou pyranose, et un ou plusieurs groupements hydroxyles, un au moins des groupements hydroxyles étant substitué par un groupement mono- ou poly-alcoxylé.

Encore plus préférentiellement, selon cette variante, le système tensioactif consiste essentiellement en un ou plusieurs esters d'acides gras et de sorbitanes mono- ou poly-éthoxylés ou d'isosorbides mono- ou poly-éthoxylés.

De façon avantageuse, selon cette variante, le système tensioactif consiste essentiellement en une ou plusieurs molécules choisies parmi les esters d'acides gras et de sorbitanes mono- ou poly-éthoxylés de formule (VIII) ou d'isosorbides mono- ou poly-éthoxylés de formule (IX) telles que définies ci-dessus.

### - Troisième variante :

Selon un mode de réalisation préféré, la composition comprend au moins, ou mieux, consiste essentiellement en :
- un tensioactif non-ionique choisi parmi les molécules hydrocarbonées oxygénées en C₄-C₂₀ comprenant un ou deux cycles furanose ou pyranose, et un ou plusieurs groupements hydroxyles, un au moins des groupements hydroxyles étant substitué par un groupement mono- ou poly-alcoxylé,
- un stabilisant d'émulsion choisi notamment parmi les acides gras en C₈-C₃₀,
- un tensioactif non-ionique choisi parmi les esters d'acides gras en C₈-C₃₀ et de molécules hydrocarbonées oxygénées en C₄-C₂₀ comprenant un ou deux cycles furanose ou pyranose, et un ou plusieurs groupements hydroxyles, un au moins des groupements hydroxyles étant substitué par un groupement mono- ou poly-alcoxylé.

Encore plus préférentiellement, selon cette variante, la composition comprend au moins, ou mieux, consiste essentiellement en :
- un tensioactif non-ionique choisi parmi les sorbitanes mono- ou poly-éthoxylés et les isosorbides mono- ou poly-éthoxylés,
- un stabilisant d'émulsion choisi notamment parmi les acides gras en C₁₀-C₂₄,
- un tensioactif non-ionique choisi parmi esters d'acide gras en C₁₀-C₂₄ et de sorbitanes mono- ou poly-éthoxylés ou d'isosorbides mono- ou poly-éthoxylés.

Avantageusement, selon cette variante, la composition comprend au moins, ou mieux, consiste essentiellement en :
- un tensioactif non-ionique choisi parmi les sorbitanes mono- ou poly-éthoxylés de formule (VI) et les isosorbides mono- ou poly-éthoxylés de formule (VII),
- un stabilisant d'émulsion choisi notamment parmi les acides gras en C₁₂-C₂₀,
- un tensioactif non-ionique choisi parmi esters d'acide gras en C₁₂-C₂₀ et de sorbitanes mono- ou poly-éthoxylés de formule (VIII) ou d'isosorbides mono- ou poly-éthoxylés de formule (IX).

Eventuellement, compte-tenu du procédé de synthèse de ces molécules, la présence de polymères et de copolymères d'oxyde d'éthylène et d'oxyde de propylène ainsi que des esters d'acides gras et de tels polymères peut être envisagée.

Les tensioactifs et stabilisants sont mis en œuvre en quantités suffisantes pour permettre la dispersion de la paraffine dans la composition aqueuse. L'homme du métier sait adapter leur dosage en fonction de la paraffine choisie et de sa quantité dans la composition.

### - Quatrième variante :

Selon un autre mode de réalisation préféré, la composition comprend au moins, ou mieux, consiste essentiellement en :
- un tensioactif non-ionique choisi parmi les molécules hydrocarbonées oxygénées en C₄-C₂₀ comprenant un ou deux cycles furanose ou pyranose, et un ou plusieurs groupements hydroxyles, un au moins des groupements hydroxyles étant substitué par un groupement mono- ou poly-alcoxylé,
- un stabilisant d'émulsion choisi notamment parmi les acides gras en C₈-C₃₀,
- un tensioactif non-ionique choisi parmi les esters d'acides gras en C₈-C₃₀ et de molécules hydrocarbonées oxygénées en C₄-C₂₀ comprenant un ou deux cycles furanose ou pyranose, et un ou plusieurs groupements hydroxyles.

Encore plus préférentiellement, selon cette variante, la composition comprend au moins, ou mieux, consiste essentiellement en :
- un tensioactif non-ionique choisi parmi les sorbitanes mono- ou poly-éthoxylés et les isosorbides mono- ou poly-éthoxylés,
- un stabilisant d'émulsion choisi notamment parmi les acides gras en C₁₀-C₂₄,
- un tensioactif non-ionique choisi parmi esters d'acide gras en C₁₀-C₂₄ et de sorbitanes ou d'isosorbides.
- Esters d'acides gras et de sorbitanes :

Ils peuvent être représentés par la formule (X) ci-dessous :

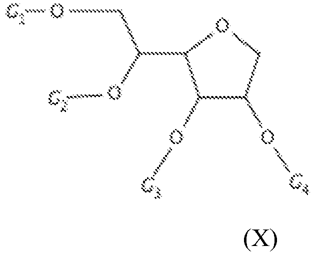

Dans laquelle G1, G2, G3, G4 représentent, indépendamment, un atome d'hydrogène ou un groupement alkylcarboxylique en C₈-C₃₀, l'un au moins de G1, G2, G3, G4 étant distinct de H.
- Esters d'acides gras et d'isosorbides :
   Ils peuvent être représentés par la formule (XI) ci-dessous 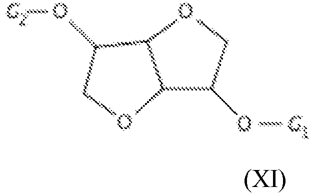 dans laquelle G1 et G2 représentent indépendamment un atome d'hydrogène ou un groupement alkylcarboxylique en C₈-C₃₀, l'un au moins de G1 et G2 étant distinct de H.

Avantageusement, selon cette variante, la composition comprend au moins, ou mieux, consiste essentiellement en :
- un tensioactif non-ionique choisi parmi les sorbitanes mono- ou poly-éthoxylés de formule (VI) et les isosorbides mono- ou poly-éthoxylés de formule (VII),
- un stabilisant d'émulsion choisi notamment parmi les acides gras en C₁₂-C₂₀,
- un tensioactif non-ionique choisi parmi esters d'acide gras en C₁₂-C₂₀ et de sorbitanes de formule (X) ou d'isosorbides de formule (XI).

Eventuellement, compte-tenu du procédé de synthèse de ces molécules, la présence de polymères et de copolymères d'oxyde d'éthylène et d'oxyde de propylène peut être envisagée.

Les tensioactifs et stabilisants sont mis en œuvre en quantités suffisantes pour permettre la dispersion de la paraffine dans la composition aqueuse. L'homme du métier sait adapter leur dosage en fonction de la paraffine choisie et de sa quantité dans la composition.

### La composition :

La composition aqueuse peut contenir un ou plusieurs autres additifs que les additifs polyfonctionnels tels que définis ci-dessus, tels que par exemple d'autres additifs anti-mousse, des co-solvants destinés à favoriser la dissolution du ou des tensioactifs dans la composition aqueuse. La composition aqueuse est préparée de manière usuelle par mélange de ses constituants, de préférence à température ambiante, typiquement dans une plage de température allant en général de 10 à 60 °C. Avantageusement, la composition aqueuse comprend au moins un additif anti-mousse. Par exemple, l'anti-mousse peut être le produit Foam Ban 3588 G ® (solution aqueuse à base de siloxane) commercialisé par la société Munzing.

Les additifs polyfonctionnels solubles dans l'eau, plus particulièrement à température ambiante, sont en général préférés. Pour des raisons de rapidité de mélange des constituants de la solution aqueuse, on préfère éviter les composants pâteux et/ou solides.

De manière préférée, les compositions aqueuses répondent à la norme ISO 22241-1 pour ce qui concerne les quantités indiquées dans le tableau 1 de ladite norme: aldéhydes, matière insoluble, phosphate, calcium, fer, cuivre, zinc, chrome, nickel, aluminium, sodium, potassium. D'une manière générale les compositions aqueuses contiennent tout élément et/ou composant en quantité telle qu'il n'est pas susceptible d'être un poison du catalyseur SCR.

Selon une variante, la composition aqueuse est une composition concentrée comprenant le précurseur dudit agent réducteur de NOx, en particulier l'urée, la ou les paraffine(s), les additifs : les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol, et avantageusement le ou les tensioactif(s) et stabilisant(s) additionnels, dans les proportions exposées ci-dessus qui peut être diluée avec de l'eau avant sa mise en œuvre.

De préférence, selon cette variante, la composition concentrée comprend, et encore plus préférentiellement consiste essentiellement en :
- de l'eau,
- de 20% à 60% en masse d'un agent réducteur des NOx ou d'un précurseur d'un agent réducteur des NOx, plus préférentiellement de 30% à 50% en masse, encore plus préférentiellement de 30% à 35% en masse, et avantageusement de 32% à 35% en masse,
- de 1 à 80% en masse d'une ou plusieurs paraffines dispersées dans la phase aqueuse, plus préférentiellement de 1 à 40% en masse, encore plus préférentiellement de 5 à 35% en masse, et avantageusement de 10 à 25% en masse,
- de 1 à 40% en masse d'un ou plusieurs additifs choisi parmi : les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol, plus préférentiellement de 5 à 35% en masse, et encore plus préférentiellement de 5 à 15% en masse, et
- optionnellement, un ou plusieurs tensioactifs et stabilisants,
les teneurs étant données en masse par rapport à la masse totale de la composition.

Encore plus préférentiellement selon cette variante, la composition concentrée comprend, et encore plus préférentiellement consiste essentiellement en :
- de l'eau,
- de 20% à 60% en masse d'un agent réducteur des NOx ou d'un précurseur d'un agent réducteur des NOx, plus préférentiellement de 30% à 50% en masse, encore plus préférentiellement de 30% à 35% en masse, et avantageusement de 32% à 33% en masse,
- de 1% à 80% en masse d'une ou plusieurs paraffines dispersées dans la phase aqueuse, plus préférentiellement de 1% à 40% en masse, et encore plus préférentiellement de 5% à 35% en masse, et avantageusement de 10% à 25% en masse,
- de 1 à 40% en masse d'un ou plusieurs additifs choisi parmi : les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol, plus préférentiellement de 5% à 35% en masse, et encore plus préférentiellement de 5% à 15% en masse, et
- optionnellement, un ou plusieurs tensioactifs et stabilisants,
les teneurs étant données en masse par rapport à la masse totale de la composition.

Selon cette variante, avantageusement, la paraffine représente de 1 à 40% en masse de la composition et l'additif représente de 1 à 40% en masse de la composition, le reste de la composition étant constituée d'une solution aqueuse d'urée, comme par exemple une solution aqueuse d'urée préformulée commerciale connue sous le nom de AdBlue ® comprenant 32,5% massique d'urée.

Plus avantageusement selon cette variante, la composition concentrée comprend, et encore plus préférentiellement consiste essentiellement en :
- de l'eau,
- de 20% à 60% en urée en masse, plus préférentiellement de 30% à 50% en masse, encore plus préférentiellement de 30% à 35% en masse, et avantageusement de 32 à 33% en masse,
- de 1 à 80% en masse d'une ou plusieurs paraffines dispersées dans la phase aqueuse, plus préférentiellement de 1% à 40% en masse, encore plus préférentiellement de 5% à 35% en masse, et avantageusement de 10% à 25% en masse,
- de 1 à 40% en masse d'un ou plusieurs additifs choisi parmi : les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol, plus préférentiellement de 5% à 35% en masse, et encore plus préférentiellement de 5% à 15% en masse, et
- optionnellement, un ou plusieurs tensioactifs et stabilisants,
les teneurs étant données en masse par rapport à la masse totale de la composition.

Encore plus avantageusement selon cette variante, la composition comprend, et encore plus préférentiellement consiste essentiellement en :
- de l'eau,
- de 20% à 60% en masse d'urée, plus préférentiellement de 30% à 50% en masse, encore plus préférentiellement de 30% à 35%, et avantageusement de 32% à 33% en masse,
- de 1 à 80% en masse d'une ou plusieurs paraffines dispersées dans la phase aqueuse, plus préférentiellement de 1% à 40% en masse, encore plus préférentiellement de 5% à 35% en masse, et avantageusement de 10% à 25% en masse,
- de 1 à 40% en masse d'un ou plusieurs additifs choisi parmi : les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol, plus préférentiellement de 5% à 35% en masse, et encore plus préférentiellement de 5% à 15% en masse, et
- optionnellement, un ou plusieurs tensioactifs et stabilisants,

les teneurs étant données en masse par rapport à la masse totale de la composition.

Selon une autre variante, la composition aqueuse est une composition comprenant le précurseur dudit agent réducteur de NOx, en particulier l'urée, la ou les paraffine(s), les additifs : les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol, et avantageusement le ou les tensioactif(s) et stabilisant(s), dans les proportions exposées ci-dessus, la concentration en précurseur dudit agent réducteur de NOx étant celle recommandée par une injection dans le système SCR. Une telle composition est injectée sans dilution préalable. Selon cette variante, de préférence la composition aqueuse est une composition comprenant de l'urée, la ou les paraffine(s) et le ou les tensioactif(s) et stabilisant(s), dans les proportions exposées ci-dessus, la concentration en urée étant de 32,5%.

Selon cette variante, les quantités de paraffine et de tensioactif étant faibles comparativement au reste de la composition, celle-ci peut être définie comme une composition aqueuse comprenant sensiblement 32,5% massique d'urée.

Selon une autre variante préférée, la composition aqueuse est préparée à partir d'une solution aqueuse préformulée d'urée, comme par exemple une composition commerciale connue sous le nom de AdBlue ® comprenant 32,5% massique d'urée, et d'une composition aqueuse concentrée d'urée additivée. Selon cette variante, la composition aqueuse concentrée d'urée additivée comprend la ou les paraffine(s), le système tensio-actif additionnel décrit ci-dessus, les additifs : les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol et éventuellement les tensioactifs, les stabilisants d'émulsion additionnels. La composition aqueuse concentrée d'urée additivée peut également comprendre un anti-mousse. La composition aqueuse concentrée d'urée additivée présente avantageusement une concentration en matières actives de 10 à 90% massiques par rapport à la masse totale de la composition, les matières actives incluant la ou les paraffines, les additifs et le ou les tensioactifs additionnels tels qu'ils ont été définis ci-dessus, et dans les proportions relatives qui ont été définies ci-dessus. Le reste de la composition aqueuse concentrée d'urée additivée est constituée d'une solution aqueuse d'urée, de préférence à une teneur de 32,5% massique d'urée. Préférentiellement, selon cette variante, la composition aqueuse concentrée d'urée additivée présente une concentration en matières actives de 25 à 75% massiques par rapport à la masse totale de la composition. Le mélange des deux compositions est réalisé avant l'injection dans le système SCR.

La même démarche pourrait être suivie à partir d'une solution aqueuse préformulée d'un autre précurseur dudit agent réducteur des NOx.

Selon un mode de réalisation préféré, la composition comprend, et encore plus préférentiellement consiste essentiellement en :
- de l'eau,
- un agent réducteur des NOx ou un précurseur d'un agent réducteur des NOx,
- une ou plusieurs paraffines dispersées dans la phase aqueuse, lesdites paraffines représentant de 5 à 10 000 ppm en masse de ladite composition, de préférence de 50 à 5 000 ppm en masse, plus préférentiellement de 100 à 2 500 ppm en masse.
- un ou plusieurs additifs choisi parmi : les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol,
- un ou plusieurs tensioactifs et stabilisants d'émulsions additionnels.

Selon un mode de réalisation encore préféré, la composition comprend, et encore plus préférentiellement consiste essentiellement en :
- de l'eau,
- de 20% à 60% en masse d'un agent réducteur des NOx ou d'un précurseur d'un agent réducteur des NOx, plus préférentiellement de 30% à 50% en masse, encore plus préférentiellement de 30% à 35% en masse, et avantageusement de 32% à 35% en masse,
- de 5 à 10 000 ppm en masse d'une ou plusieurs paraffines dispersées dans la phase aqueuse, plus préférentiellement de 50 à 5 000 ppm en masse, et encore plus préférentiellement de 100 à 2 500 ppm en masse,
- de 5 à 10 000 ppm en masse d'un ou plusieurs additifs choisi parmi : les éthers d'hydrocarbyle et de mono ou de polyalkylène glycol, les éthers d'hydrocarbylc et de polyols, les esters d'acide gras et de mono ou de polyalkylène glycol, les esters d'acide gras et de mono ou de polyglycérol, plus préférentiellement de 50 à 5 000 ppm en masse, et encore plus préférentiellement de 100 à 2 500 ppm en masse, et
- optionnellement, un ou plusieurs tensioactifs et stabilisants,
les teneurs étant données en masse par rapport à la masse totale de la composition.

Selon un mode de réalisation encore préféré, la composition comprend, et encore plus préférentiellement consiste essentiellement en :
- de l'eau,
- de 20% à 60% en masse d'un agent réducteur des NOx ou d'un précurseur d'un agent réducteur des NOx, plus préférentiellement de 30% à 50% en masse, encore plus préférentiellement de 30% à 35% en masse, et avantageusement de 32% à 33% en masse,
- de 5 à 10 000 ppm en masse d'une ou plusieurs paraffines dispersées dans la phase aqueuse, plus préférentiellement de 50 à 5 000 ppm en masse, et encore plus préférentiellement de 100 à 2 500 ppm en masse,
- de 5 à 10 000 ppm en masse d'un ou plusieurs additifs choisi parmi les éthers d'hydrocarbyle et de mono ou de polyalkylène glycol, plus préférentiellement de 50 à 5 000 ppm en masse, et encore plus préférentiellement de 100 à 2 500 ppm en masse, et
- optionnellement, un ou plusieurs tensioactifs et stabilisants,
les teneurs étant données en masse par rapport à la masse totale de la composition.

Selon un mode de réalisation encore préféré, la composition comprend, et encore plus préférentiellement consiste essentiellement en :
- de l'eau,
- de l'urée,
- une ou plusieurs paraffines dispersées dans la phase aqueuse,
lesdites paraffines représentant de 5 à 10 000 ppm en masse de ladite composition, de préférence de 50 à 5 000 ppm en masse, plus préférentiellement de 100 à 2 500 ppm en masse.
- un ou plusieurs additifs choisi parmi : les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol,
- un ou plusieurs tensioactifs et stabilisants d'émulsions additionnels.

Selon un mode de réalisation encore préféré, la composition comprend, et encore plus préférentiellement consiste essentiellement en :
- de l'eau,
- de 20% à 60% en urée en masse, plus préférentiellement de 30% à 50% en masse, encore plus préférentiellement de 30 à 35% en masse, et avantageusement de 32% à 33% en masse,
- de 5 à 10 000 ppm en masse d'une ou plusieurs paraffines dispersées dans la phase aqueuse, plus préférentiellement de 50 à 5 000 ppm en masse, et encore plus préférentiellement de 100 à 2 500 ppm en masse,
- de 5 à 10 000 ppm en masse d'un ou plusieurs additifs choisi parmi : les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol, plus préférentiellement de 50 à 5 000 ppm en masse, et encore plus préférentiellement de 100 à 2 500 ppm en masse, et
- optionnellement, un ou plusieurs tensioactifs et stabilisants,
les teneurs étant données en masse par rapport à la masse totale de la composition.

Selon un mode de réalisation encore préféré, la composition comprend, et encore plus préférentiellement consiste essentiellement en :
- de l'eau,
- de 20% à 60% en masse d'urée, plus préférentiellement de 30% à 50% en masse, encore plus préférentiellement de 30% à 35% en masse, et avantageusement de 32% à 33% en masse,
- de 5 à 10 000 ppm en masse d'une ou plusieurs paraffines dispersées dans la phase aqueuse, plus préférentiellement de 50 à 5 000 ppm en masse, et encore plus préférentiellement de 100 à 2 500 ppm en masse,
- de 5 à 10 000 ppm en masse d'un ou plusieurs additifs choisi parmi les éthers d'hydrocarbyle et de mono ou de polyalkylène glycol, plus préférentiellement de 50 à 5 000 ppm en masse, et encore plus préférentiellement de 100 à 2 500 ppm en masse, et
- optionnellement, un ou plusieurs tensioactifs et stabilisants,
les teneurs étant données en masse par rapport à la masse totale de la composition.

### Procédé de mise en œuvre :

L'invention a encore pour objet l'utilisation de la composition aqueuse selon l'invention dans tout dispositif de pulvérisation visant le post-traitement des gaz d'échappement par catalyseur SCR.

La divulgation concerne encore un procédé de traitement d'un flux d'échappement d'un moteur, ce procédé comprenant l'injection d'une composition à base d'un agent réducteur des NOx ou d'un précurseur dudit agent, en particulier à base d'urée, telle qu'elle a été décrite ci-dessus. L'injection de la composition de l'invention est réalisée en amont par rapport au positionnement du dispositif SCR dans la conduite d'échappement. Ce procédé permet de réduire les dépôts dans la conduite d'échappement, en particulier les dépôts d'acide cyanurique.

En outre, comparativement à des compositions de l'art antérieur, ledit procédé permet la manipulation de la composition, en particulier le remplissage du réservoir, sans moussage ou avec un moussage réduit.

Enfin, comparativement à des compositions de l'art antérieur, ledit procédé permet un meilleur contrôle de la quantité injectée d'agent réducteur des NOx ou de précurseur dudit agent. En effet, en l'absence de moussage, seule la composition aqueuse est injectée, tandis que certaines compositions antérieures, par leur moussage, favorisent l'injection d'air dans le réservoir et entraînent un fonctionnement imprécis de la jauge de remplissage.

La divulgation concerne encore l'utilisation d'une dispersion ou d'une émulsion ou d'une suspension aqueuse de paraffine telle que définie ci-dessus comme additif dans une solution aqueuse d'un agent réducteur des NOx, ou une solution aqueuse de précurseur dudit agent, en particulier dans une solution aqueuse d'urée, en vue d'une mise en œuvre dans un système SCR. Cette utilisation vise à réduire ou éviter les dépôts dans le dispositif SCR quelle que soit la conformation de la ligne SCR. L'utilisation de cette composition est particulièrement adaptée pour les lignes d'échappement SCR dite « close-coupled ». Avantageusement, cette utilisation vise à réduire ou éviter les dépôts dans le dispositif SCR tout en réduisant ou évitant également le moussage de la solution aqueuse d'agent réducteur des NOx lors de sa manipulation, en particulier lors de son introduction dans un réservoir. Cette utilisation vise également à permettre un meilleur contrôle de la quantité d'agent réducteur des NOx ou de précurseur dudit agent injectée.

Selon la divulgation, plusieurs variantes peuvent être prévues pour le remplissage d'un réservoir destiné aux compositions aqueuses pour système SCR contenant un agent réducteur des NOx ou un précurseur d'un agent réducteur des NOx.

Selon une première variante, tous les composants : agent réducteur des NOx ou précurseur d'un agent réducteur des NOX, notamment urée, paraffine, additifs, tensioactifs et agents stabilisants, peuvent être formulés dans une même composition et cette composition est introduite dans ledit réservoir.

Selon une autre variante, on formule une composition comprenant de l'eau et un agent réducteur des NOx ou un précurseur d'un agent réducteur des NOx. Cette première composition est introduite dans le réservoir destiné aux compositions aqueuses pour système SCR contenant un agent réducteur des NOx ou de précurseur d'un agent réducteur des NOx. On ajoute ensuite dans ledit réservoir, une composition aqueuse concentrée d'urée additivée comprenant un agent réducteur des NOx ou un précurseur d'un agent réducteur des NOx, une ou plusieurs paraffines dispersées dans la phase aqueuse, un ou plusieurs additifs choisi parmi : les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol, et éventuellement les tensioactifs et agents stabilisants additionnels.

Selon une troisième variante, on formule une composition comprenant de l'eau et un agent réducteur des NOx ou un précurseur d'un agent réducteur des NOx. Cette première composition est introduite dans un premier réservoir. On formule une seconde composition aqueuse concentrée additivée, comprenant de l'eau, un agent réducteur des NOx ou un précurseur d'un agent réducteur des NOx, une ou plusieurs paraffines dispersées dans la phase aqueuse, un ou plusieurs additifs choisi parmi : les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol, et éventuellement un ou plusieurs tensioactifs et stabilisants d'émulsions additionnels. Cette seconde composition est introduite dans un second réservoir, distinct du premier réservoir. Les deux réservoirs alimentent le système SCR, permettant le mélange des deux compositions. Un véhicule comprenant deux réservoirs pour la mise en œuvre d'une telle variante est décrit notamment dans EP2541012.

### Figures :

Figure 1 : représentation schématique d'un banc SCR.

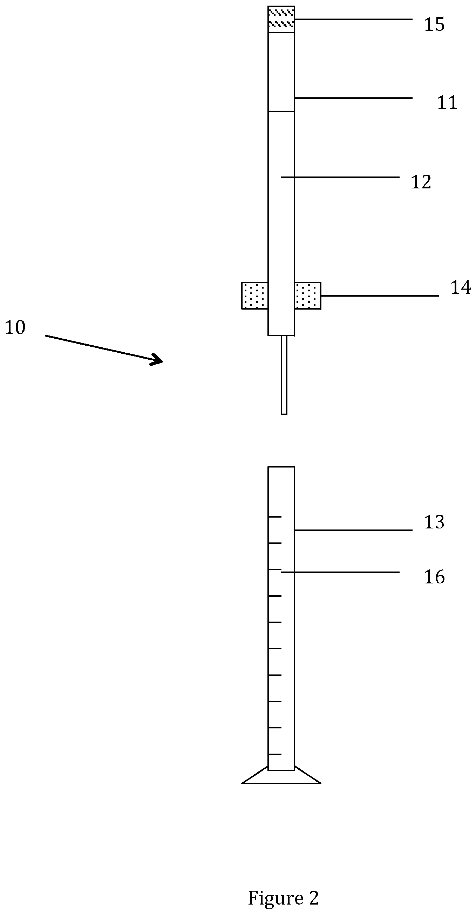

Figure 2 : représentation schématique d'un dispositif d'évaluation du moussage.

Les exemples ci-après sont donnés en vue d'illustrer les caractéristiques de l'invention mais non d'en limiter la portée.

### Partie expérimentale :

### Matériel

La liste des composés utilisés dans les exemples est donnée ci-dessous :
**Précurseur de l'agent réducteur des NOx** : composition aqueuse comprenant 32,5% en masse d'urée, disponible commercialement auprès de la société TOTAL sous le nom AdBlue®.
**Mélanges de paraffines, noté P1** : émulsion aqueuse de paraffines, disponible commercialement auprès de la société BYK sous le nom Aquacer® 497.

Les paraffines en C22-C32 représentent plus de 95% en masse de la totalité des paraffines présentes dans l'émulsion.

**Additif, noté A1:** mélange d'alcools gras polyéthoxylés disponible commercialement auprès de la société CECA S.A. sous le nom Surfaline® 1308L.

Ces additifs sont des monoéthers d'hydrocarbyle polyoxyéthylénés de formule (I) comprenant entre 1 et 20 unités dérivées de l'éthylène glycol et dont le groupement hydrocarbyle est un groupement alkyle en C8-C30.

### Méthodes

### a) Détermination de la quantité de dépôts formés dans une ligne d'échappement SCR

### Méthode 1 :

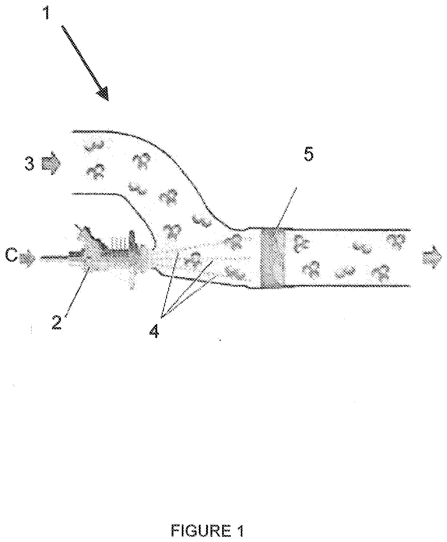

Selon une première méthode, les essais sont réalisés sur un banc SCR 1 dont la configuration est représentée sur la figure 1. La composition C est pulvérisée via un injecteur 2 situé légèrement en retrait par rapport au flux 3 des gaz d'échappement. Les gouttelettes de solution 4 viennent ensuite s'impacter sur le mélangeur 5 afin de faciliter son homogénéisation et la réaction d'hydrolyse de l'urée dans le flux de gaz chauds. La ligne d'échappement est alimentée en air par un pistolet à air chaud (non représenté), la température des gaz et leur débit sont contrôlés. Des thermocouples (non représentés) placés au niveau de l'injecteur, en sortie de ligne et à proximité de la ligne permettent le suivi des conditions thermiques au cours de l'essai.

Les conditions opératoires de l'essai sont résumées dans le tableau 1 ci-dessous :

**Tableau 1 : Conditions opératoires sélectionnées pour le banc SCR**

| | |
|---|---|
| Durée [h] | 2,5 |
| Débit d'air [L/min] | 500 |
| Débit d'AdBlue ® [g/h] | 60 |
| Température injecteur [°C] | 250 |

Afin d'évaluer la performance d'un produit, on compare la masse de dépôts recueillie sur les deux zones suivantes : la zone « injecteur » (nez/porte-injecteur) et la zone « mélangeur » (amont/mixeur/aval).

Les dépôts sont recueillis et pesés sur les zones « injecteur » et « mélangeur » de la ligne SCR. Le total des dépôts récoltés pour chaque essai est calculé.

### Méthode 2 :

Selon une seconde méthode, les essais sont réalisés sur un banc à flux d'air équipé d'un dispositif permettant de contrôler la température du flux d'air, d'un réchauffeur d'air, d'un ventilateur réglable et de capteurs thermo-couples et sur lequel est installé une ligne commerciale close-coupled SCR Volkswagen pour moteur diesel utilisée dans des véhicules destinés au transport de personnes.

La ligne commerciale SCR utilisée dans cette méthode est composée d'un catalyseur d'oxydation pour moteur diesel (en anglais DOC pour « *Diesel Oxydation Catalyst* ») et d'un réducteur catalytique sur filtre (en anglais SCRoF pour « *Selective Catalytic Reducer on Filter* ») en configuration dite « close-coupled ». L'injecteur utilisé pour l'introduction de la composition réducteur est NOx se situe entre le DOC et le SCRoF, en amont du mélangeur et à une distance du catalyseur SCR d'environ 30 cm.

Un tel dispositif est décrit dans M. Lecompte et al., « The Benefits of Diesel Exhaust Fluid (DEF) Additivation on Urea-Derived Deposits Formation in a Close-Coupled Diesel SCR on Filter Exhaust Line », SAE In. J. Fuels Lubr., vol. 10, 3ème numéro, Novembre 2017.

La composition est pulvérisée via un injecteur situé légèrement en retrait par rapport au flux des gaz. Les gouttelettes de solution viennent ensuite s'impacter sur le mélangeur (mixer) afin de faciliter son homogénéisation et la réaction d'hydrolyse de l'urée dans le flux de gaz chauds. La ligne d'échappement est alimentée en air au moyen d'un compresseur d'air. Le débit d'air est contrôlé par des cols soniques et sa température est contrôlée par un réchauffeur d'air. Des thermocouples placés en amont de l'injecteur, en sortie de ligne et à proximité de la ligne permettent le suivi des conditions thermiques au cours de l'essai.

Les conditions opératoires de l'essai sont résumées dans le tableau 2 ci-dessous :

**Tableau 2 : Conditions opératoires sélectionnées pour le banc SCR**

| | |
|---|---|
| Durée de stabilisation sans d'injection [min] | 15 min |
| Durée d'injection [min] | 30 min |
| Débit d'air [kg/h] | 75 |
| Débit de solution aqueuse d'urée [mg/s] | 40 |
| Température amont injecteur [°C] | 180 |

Afin d'évaluer la performance d'un produit, on compare la masse de dépôts recueillie sur la zone « mélangeur ».

Les dépôts sont donc recueillis et pesés sur la zone « mélangeur » de la ligne SCR.

### b) Evaluation du moussage :

La méthode repose sur l'emploi d'un dispositif 10 comprenant un réservoir 11 (colonne d'injection) dans lequel le produit 12 est conservé sous pression, une éprouvette 13 graduée en verre de 250 mL, une cellule de détection 14 de type photoélectrique, une électrovanne 15 contrôlant l'ouverture et la fermeture du réservoir et un chronomètre (non représenté). La méthode consiste à injecter une quantité de produit 12 (100 mL) à une pression de 400 millibars dans l'éprouvette graduée 13. La cellule de détection 14 détecte le moment où les 100mL de produit 12 initialement présents dans la colonne d'injection 11 se sont vidés dans l'éprouvette 13. L'électrovanne 15 se ferme et le chronomètre se déclenche. Le volume de mousse formé est repéré visuellement à l'aide des graduations 16 présentes sur l'éprouvette 13. Le temps au bout duquel la mousse a complètement disparu est également noté. L'essai est arrêté au bout de 300 secondes si de la mousse est encore présente.

### Préparations des compositions

Les compositions C¹ à C¹⁰ sont préparées à partir de la composition précurseur de l'agent réducteur des NOx par addition du mélange de paraffines P1 et/ou de l'additif A1 selon différentes teneurs.

Les constituants utilisés pour la préparation des compositions C¹ à C¹⁰ et leurs teneurs sont donnés dans le tableau 3 ci-dessous. Les teneurs y sont exprimées en masse par rapport à la masse totale des compositions obtenues.

La composition C⁰ comprend uniquement de la composition précurseur de l'agent réducteur des NOx et constitue donc une composition de référence.

Les compositions C⁰ à C⁸ sont comparatives. Les compositions C⁹ et C¹⁰ sont selon l'invention.

**Tableau 3 : Constituants des compositions C⁰ à C¹⁰**

| Composition | **Additif A1** (ppm) | **Paraffine P1** (ppm) |
|---|---|---|
| **C⁰** | - | - |
| **C¹** | 500 | - |
| **C²** | 2 500 | |
| **C³** | - | 500 |
| **C⁴** | - | 1 000 |
| **C⁵** | - | 2 000 |
| **C⁶** | - | 2 500 |
| **C⁷** | - | 4 000 |
| **C⁸** | - | 5 000 |
| **C⁹** | 500 | 500 |
| **C¹⁰** | 500 | 2 000 |

### Résultats

### a) Mesure de la quantité de dépôts formés dans une ligne d'échappement SCR

La capacité des compositions C⁰ à C², C⁴ à C⁷ et C¹⁰ à prévenir la formation de dépôts dans une ligne d'échappement SCR est évaluée selon la méthode 2 décrite ci-dessus.

Chaque mesure a été réalisée 3 fois. Les valeurs figurant dans le tableau 3 correspondent à la moyenne des 3 valeurs obtenues.

Les résultats de ces essais sont rapportés dans le tableau 4 suivant :

**Tableau 4 : Quantité de dépôts formés dans une ligne SCR dans laquelle est introduite l'une des compositions C⁰ à C², C⁴ à C⁷ et C¹⁰**

| Composition | **C⁰** | **C¹** | **C²** | **C⁴** | **C⁵** | **C⁶** | **C⁷** | **C¹⁰** |
|---|---|---|---|---|---|---|---|---|
| **Masse des dépôts** (en g) | 0,60 | 0,22 | 0,19 | 0,23 | 0,28 | 0,26 | 0,25 | 0,12 |

La présence de l'additif chimique A1 dans la composition précurseur de l'agent réducteur des NOx permet de diviser par 3 la masse de dépôts formés au niveau du « mélangeur » par rapport à la composition de référence C⁰.

La présence du mélange de paraffines P1 dans la composition précurseur de l'agent réducteur des NOx permet également de diminuer la masse de dépôts formés au niveau du « mélangeur » : la masse de dépôts formés a été divisée par plus de 2 par rapport à la composition de référence C⁰.

La composition C¹⁰ qui comprend à la fois l'additif A1 et la paraffine P1 est avantageuse en ce que la masse de dépôts formés au niveau du « mélangeur » est très significativement réduite par rapport aux compositions C¹, C² et C⁴ à C⁷.

### b) Moussage des compositions

Le caractère moussant des compositions C² à C⁴ et C⁸ à C¹⁰ est évalué selon la méthode décrite précédemment.

Seul le volume de mousse formée a été mesuré.

Les résultats sont donnés dans le tableau 5 suivant :

**Tableau 5 : Moussage des compositions C¹ à C³ et C⁸ à C¹⁰**

| Composition | **C¹** | **C²** | **C³** | **C⁴** | **C⁵** | **C⁸** | **C⁹** | **C¹⁰** |
|---|---|---|---|---|---|---|---|---|
| **Volume de mousse** (en mL) | 94 | 110 | 30 | 30 | 34 | 60 | 90 | 66 |

Les compositions C¹ et C² comprenant uniquement le composé précurseur de l'agent réducteur des NOx et 500 ppm, respectivement 2500 ppm, de l'additif A1 conduisent, lors de leur versement, à la formation d'un volume important de mousse : 94 et 110mL de manière respective.

On observe par ailleurs que plus la teneur en additif A1 est élevée, plus le volume de mousse formée est important.

Les compositions C³ à C⁵ et C⁸ comprenant uniquement le composé précurseur de l'agent réducteur des NOx et la paraffine P1 conduisent également, lors de leur versement, à la formation de mousse.

Le volume de mousse formée est toutefois bien inférieur à celui formé par les compositions C¹ et C² :
- de 500 à 2 000 ppm de paraffine (compositions C³ à C⁵), le volume de mousse formé est stable autour de 30mL, et
- à une teneur de 5 000 ppm en paraffines (composition C⁸), le volume de mousse formé est de 60 mL.

Les compositions C⁹ et C¹⁰ comprenant, outre le composé précurseur de l'agent réducteur des NOx, l'additif A1 et la paraffine P1 conduisent également à la formation de mousse : 90 et 66mL de manière respective.

Toutefois, le volume de mousse formée est significativement réduit par rapport à la composition C¹ qui présente la même teneur en additif A1 mais qui est exempte de paraffine (94 mL).

L'ajout de paraffines P1 permet de diminuer le volume de mousse formée lors du versement d'une composition précurseur de l'additif réducteur des NOx additivée avec l'additif A1.

On note par ailleurs que, dans une composition comprenant l'additif A1 et la paraffine P1, plus la teneur en paraffine P1 est élevée, plus le volume de mousse est réduit.

### Conclusion

On constate que les compositions selon l'invention présentent une quantité de dépôts réduite par rapport aux compositions de l'art antérieur. En outre, les compositions selon l'invention présentent un moussage réduit par rapport aux compositions de référence.

## Revendications

1. Composition aqueuse comprenant au moins un agent réducteur des NOx ou un précurseur d'un agent réducteur des NOx, au moins une paraffine et au moins un additif choisi parmi :
- les éthers d'hydrocarbyle et de mono ou de polyalkylène glycol,
- les éthers d'hydrocarbyle et de polyols,
- les esters d'acide gras et de mono ou de polyalkylène glycol,
- les esters d'acide gras et de mono ou de polyglycérol,
- les mélanges de ces composés,
**caractérisée en ce que** le pourcentage massique de paraffines en C₂₀-C₃₆ représente au moins 90% en masse par rapport à la masse totale de paraffines dans la composition.

2. Composition selon la revendication 1, dans laquelle ladite paraffine représente de 5 à 10 000 ppm en masse de ladite composition et ledit additif représente de 5 à 10 000 ppm en masse de ladite composition.

3. Composition selon la revendication 1, dans laquelle ladite paraffine représente de 1 à 80% en masse de ladite composition et l'additif représente de 1 à 40% en masse de ladite composition.

4. Composition aqueuse selon l'une quelconque des revendications précédentes, dans laquelle les éthers d'hydrocarbyle et de mono ou de polyalkylène glycol sont représentés par les formules suivantes :
• les monoéthers d'hydrocarbyle mono- ou poly-alcoxylés de formule (I) :
R-(Yᵢ)n-OH (I),
• les di-éthers d'hydrocarbyle mono- ou poly-alcoxylés de formule (II) :
R'-(Yⱼ)m-OR" (II),
• les di-éthers d'hydrocarbyle mono- ou poly-alcoxylés de formule (III) :
HO-(Yᵢ)n-R'''-(Yⱼ)m-OH (III),
• les mélanges de ces composés,
∘ R, R', R" représentent indépendamment des groupements alkyle ou alcényle ou alcynyle ou aryle ou aralkyle en C₃-C₄₀, R'" représente un groupement alcane diyle ou alcène diyle ou alcyne diyle ou un di-radical aryle ou un di-radical aralkyle en C₃-C₄₀,
∘ Yᵢ et Yⱼ sont des groupements choisis de façon indépendante parmi :
-(O-CH₂-CH₂)-, -(O-CH(CH₃)-CH₂)- et -(O-CH₂-CH₂-CH₂)-, étant entendu que l'atome d'oxygène des groupements Yᵢ et Yⱼ se trouve toujours du côté du R, R', R" ou R''',
∘ n, m représentent un entier allant de 1 à 60, avantageusement de 1 à 30, encore mieux de 1 à 20.

5. Composition selon la revendication 4 dans laquelle R, R', R" sont sélectionnés parmi les alkyles linéaires en C₈-C₃₀ et R''' est choisi parmi les alcanediyles linéaires en C₈-C₃₀.

6. Composition selon l'une quelconque des revendications 4 et 5 dans laquelle n et m représentent un entier allant de 3 à 15.

7. Composition selon l'une quelconque des revendications 4 à 6 dans laquelle dans les formules (I), (II) et (III) les groupements Yᵢ, Yⱼ représentent -(O-CH₂-CH₂)-.

8. Composition selon l'une quelconque des revendications précédentes, dans laquelle la teneur en agent réducteur des NOx ou en précurseur d'un agent réducteur des NOx va de 20% à 60% en masse, par rapport à la masse totale de la composition.

9. Composition selon la revendication 8, dans laquelle la teneur en agent réducteur des NOx ou en précurseur d'un agent réducteur des NOx va de 30% à 50% en masse, par rapport à la masse totale de la composition.

10. Composition selon la revendication 9, dans laquelle la teneur en agent réducteur des NOx ou en précurseur d'un agent réducteur des NOx va de 30% à 35% en masse, par rapport à la masse totale de la composition.

11. Composition selon l'une quelconque des revendications précédentes, dans laquelle le précurseur de l'agent réducteur des NOx est l'urée.

12. Composition selon l'une quelconque des revendications précédentes, dans laquelle le rapport massique des composés additifs choisis parmi les éthers d'hydrocarbyle et de mono ou de polyalkylène glycol, les éthers d'hydrocarbyle et de polyols, les esters d'acide gras et de mono ou de polyalkylène glycol, les esters d'acide gras et de mono ou de polyglycérol, par rapport à la ou les paraffines dans la composition est de 0,1 :10 à 10 : 0,1, de préférence de 1 :10 à 10 :1, plus préférentiellement de 1 :10 à 1 :1.

13. Utilisation d'une composition selon l'une quelconque des revendications précédentes, pour le post-traitement des gaz d'échappement par catalyseur Réducteur Catalytique Sélectif.

14. Utilisation selon la revendication 13, pour prévenir, limiter, empêcher la formation de dépôts dans une ligne d'échappement SCR.

15. Utilisation selon l'une quelconque des revendications 13 et 14, pour éviter ou réduire le moussage lors de la manipulation de ladite composition pour son utilisation, son stockage et/ou son transport, par exemple lors des opérations de transvasement ou de remplissage de contenants tels que les bidons, les réservoirs de carburant de véhicule, les cuves de stockage ou les cuves de transport.

## Patentansprüche

1. Wässrige Zusammensetzung, die mindestens ein Reduktionsmittel für NOx oder eine Vorstufe eines Reduktionsmittels für NOx, mindestens ein Paraffin und mindestens ein Additiv umfasst, welches aus den folgenden ausgewählt ist:
- den Ethern von Kohlenwasserstoffen und von Mono- oder Polyalkylenglykol,
- den Ethern von Kohlenwasserstoffen und von Polyolen,
- den Estern von Fettsäuren und von Mono- oder Polyalkylenglykol,
- den Estern von Fettsäuren und von Mono- oder Polyglycerin,
- den Mischungen dieser Verbindungen,
**dadurch gekennzeichnet, dass** der Massenprozentanteil von C₂₀-C₃₆-Paraffinen mindestens 90 Massen-% ausmacht, bezogen auf die Gesamtmasse an Paraffinen in der Zusammensetzung.

2. Zusammensetzung nach Anspruch 1, wobei das Paraffin 5 bis 10.000 ppm nach Masse von der Zusammensetzung ausmacht und das Additiv 5 bis 10.000 ppm nach Masse von der Zusammensetzung ausmacht.

3. Zusammensetzung nach Anspruch 1, wobei das Paraffin 1 bis 80 Massen-% von der Zusammensetzung ausmacht und das Additiv 1 bis 40 Massen-% von der Zusammensetzung ausmacht.

4. Wässrige Zusammensetzung nach einem beliebigen der vorhergehenden Ansprüche, wobei die Ether von Kohlenwasserstoffen und von Mono- oder Polyalkylenglykol den folgenden Formeln entsprechen:
• den mono- oder polyalkoxylierten Kohlenwasserstoffmonoethern der Formel (I):
R-(Yi)n-OH (I),
• den mono- oder polyalkoxylierten Kohlenwasserstoffdiethern der Formel (II):
R'-(Yⱼ)m-OR" (II),
• den mono- oder polyalkoxylierten Kohlenwasserstoffdiethern der Formel (III):
HO-(Yᵢ)n-R'''-(Yⱼ)m-OH (III),
• den Mischungen dieser Verbindungen,
∘ R, R', R" stehen unabhängig voneinander für Alkyl- oder Alkenyl- oder Alkinyl- oder Aryl- oder Aralkylgruppen des Umfangs C₃-C₄₀, R''' steht für eine Alkandiyl- oder Alkendiyl- oder Alkindiylgruppe oder einen zweibindigen Arylrest oder einen zweibindigen Aralkylrest des Umfangs C₃-C₄₀,
∘ Yᵢ und Yⱼ sind Gruppen, die auf unabhängige Weise aus den folgenden ausgewählt sind:
-(O-CH₂-CH₂)-, -(O-CH(CH₃)-CH₂)- und -(O-CH₂-CH₂-CH₂)-, wobei es sich versteht, dass das Sauerstoffatom der Gruppen Yᵢ und Yⱼ sich stets auf der Seite von R, R', R" oder R''' befindet,
∘ n, m stehen für eine ganze Zahl im Bereich von 1 bis 60, vorteilhafterweise von 1 bis 30, besser noch von 1 bis 20.

5. Zusammensetzung nach Anspruch 4, wobei R, R', R" aus den geradkettigen C₈-C₃₀-Alkylen ausgewählt sind und R''' aus den geradkettigen C₈-C₃₀-Alkandiylen ausgewählt ist.

6. Zusammensetzung nach einem beliebigen der Ansprüche 4 und 5, wobei n und m für eine ganze Zahl im Bereich von 3 bis 15 stehen.

7. Zusammensetzung nach einem beliebigen der Ansprüche 4 bis 6, wobei in den Formeln (I), (II) und (III) die Gruppen Yᵢ, Yⱼ für -(O-CH₂-CH₂)- stehen.

8. Zusammensetzung nach einem beliebigen der vorhergehenden Ansprüche, wobei der Gehalt an Reduktionsmittel für NOx oder an Vorstufe eines Reduktionsmittel für NOx im Bereich von 20 % bis 60 % nach Masse liegt, bezogen auf die Gesamtmasse der Zusammensetzung.

9. Zusammensetzung nach Anspruch 8, wobei der Gehalt an Reduktionsmittel für NOx oder an Vorstufe eines Reduktionsmittel für NOx im Bereich von 30 % bis 50 % nach Masse liegt, bezogen auf die Gesamtmasse der Zusammensetzung.

10. Zusammensetzung nach Anspruch 9, wobei der Gehalt an Reduktionsmittel für NOx oder an Vorstufe eines Reduktionsmittel für NOx im Bereich von 30 % bis 35 % nach Masse liegt, bezogen auf die Gesamtmasse der Zusammensetzung.

11. Zusammensetzung nach einem beliebigen der vorhergehenden Ansprüche, wobei es sich bei der Vorstufe des Reduktionsmittels für NOx um Harnstoff handelt.

12. Zusammensetzung nach einem beliebigen der vorhergehenden Ansprüche, wobei das Massenverhältnis zwischen den Additivverbindungen, welche aus den Ethern von Kohlenwasserstoffen und von Mono- oder Polyalkylenglykol, den Ethern von Kohlenwasserstoffen und von Polyolen, den Estern von Fettsäuren und von Mono- oder Polyalkylenglykol, den Estern von Fettsäuren und von Mono- oder Polyglycerin ausgewählt sind, und dem oder den Paraffin(en) in der Zusammensetzung 0,1 : 10 bis 10 : 0,1, vorzugsweise 1 : 10 bis 10 : 1, stärker bevorzugt 1 : 10 bis 1 : 1 beträgt.

13. Verwendung einer Zusammensetzung nach einem beliebigen der vorhergehenden Ansprüche zur Nachbehandlung von Abgasen mittels eines Katalysators zur selektiven katalytischen Reduktion.

14. Verwendung nach Anspruch 13, um die Bildung von Ablagerungen in einer SCR-Auspuffanlage zu verhüten, zu begrenzen, zu verhindern.

15. Verwendung nach einem beliebigen der Ansprüche 13 und 14, um eine Schaumbildung zu vermeiden oder zu verringern, wenn die Zusammensetzung zum Zwecke ihrer Verwendung, ihrer Lagerung und/oder ihres Transports gehandhabt wird, beispielsweise bei Vorgängen des Umfüllens oder des Befüllens von Behältern wie Kanistern, Kraftstofftanks von Fahrzeugen, Lagertanks oder Transportgefäßen.

## Claims

1. Aqueous composition comprising at least one reducing agent for NOx or a precursor of a reducing agent for NOx, at least one paraffin and at least one additive chosen from:
- mono- or polyalkylene glycol hydrocarbyl ethers,
- polyol hydrocarbyl ethers,
- mono- or polyalkylene glycol fatty acid esters,
- mono- or polyglycerol fatty acid esters,
- the mixtures of these compounds,
**characterized in that** the percentage by weight of C₂₀-C₃₆ paraffins represents at least 90% by weight, with respect to the total weight of paraffins in the composition.

2. Composition according to Claim 1, in which the said paraffin represents from 5 to 10 000 ppm by weight of the said composition and the said additive represents from 5 to 10 000 ppm by weight of the said composition.

3. Composition according to Claim 1, in which the said paraffin represents from 1% to 80% by weight of the said composition and the additive represents from 1% to 40% by weight of the said composition.

4. Aqueous composition according to any one of the preceding claims, in which the mono- or polyalkylene glycol hydrocarbyl ethers are represented by the following formulae:
• mono- or polyalkoxylated hydrocarbyl monoethers of formula (I):
R-(Yᵢ)ₙ-OH (I),
• mono- or polyalkoxylated hydrocarbyl diethers of formula (II):
R'-(Yⱼ)ₘ-OR" (II),
• mono- or polyalkoxylated hydrocarbyl diethers of formula (III):
HO-(Yᵢ)ₙ-R'''-(Yⱼ)ₘ-OH (III),
• the mixtures of these compounds,
∘ R, R' and R" independently represent C₃-C₄₀ alkyl or alkenyl or alkynyl or aryl or aralkyl groups and R'" represents a C₃-C₄₀ alkanediyl or alkenediyl or alkynediyl group or aryl diradical or aralkyl diradical group,
∘ Yᵢ and Yⱼ are groups independently chosen from:
-(O-CH₂-CH₂)-, -(O-CH(CH₃)-CH₂)- and -(O-CH₂-CH₂-CH₂)-, it being understood that the oxygen atom of the Yᵢ and Yⱼ groups is always found on the side of the R, R', R" or R'",
∘ n and m represent an integer ranging from 1 to 60, advantageously from 1 to 30, better still from 1 to 20.

5. Composition according to Claim 4, in which R, R' and R" are selected from linear C₈-C₃₀ alkyls and R'" is chosen from linear C₈-C₃₀ alkanediyls.

6. Composition according to either one of Claims 4 and 5, in which n and m represent an integer ranging from 3 to 15.

7. Composition according to any one of Claims 4 to 6, in which, in the formulae (I), (II) and (III) the Yᵢ and Yⱼ groups represent -(O-CH₂-CH₂)-.

8. Composition according to any one of the preceding claims, in which the content of reducing agent for NOx or of precursor for a reducing agent for NOx ranges from 20% to 60% by weight, with respect to the total weight of the composition.

9. Composition according to Claim 8, in which the content of reducing agent for NOx or of precursor of a reducing agent for NOx ranges from 30% to 50% by weight, with respect to the total weight of the composition.

10. Composition according to Claim 9, in which the content of reducing agent for NOx or of precursor of a reducing agent for NOx ranges from 30% to 35% by weight, with respect to the total weight of the composition.

11. Composition according to any one of the preceding claims, in which the precursor of the reducing agent for NOx is urea.

12. Composition according to any one of the preceding claims, in which the ratio by weight of the additive compounds chosen from mono- or polyalkylene glycol hydrocarbyl ethers, polyol hydrocarbyl ethers, mono- or polyalkylene glycol fatty acid esters and mono- or polyglycerol fatty acid esters, with respect to the paraffin(s) in the composition, is from 0.1:10 to 10:0.1, preferably from 1:10 to 10:1, more preferentially from 1:10 to 1:1.

13. Use of a composition according to any one of the preceding claims in the post treatment of exhaust gases by a Selective Catalytic Reducer catalyst.

14. Use according to Claim 13, for preventing, limiting or stopping the formation of deposits in an SCR exhaust line.

15. Use according to either one of Claims 13 and 14, for preventing or reducing foaming during the handling of the said composition for its use, its storage and/or its transportation, for example during operations of decanting or of filling containers, such as cans, vehicle fuel tanks, storage tanks or transportation tanks.
